(19) Europäisches Patentamt / European Patent Office / Office européen des brevets

(11) **EP 4 161 047 A1**

(12) **EUROPÄISCHE PATENTANMELDUNG**

(43) Veröffentlichungstag:
**05.04.2023 Patentblatt 2023/14**

(21) Anmeldenummer: **21199715.0**

(22) Anmeldetag: **29.09.2021**

(51) Internationale Patentklassifikation (IPC):
**H04N 1/047** (2006.01)   **G01J 5/20** (2006.01)
**H04N 5/33** (2006.01)

(52) Gemeinsame Patentklassifikation (CPC):
**G01J 5/20; G01J 5/0022; G01J 5/026; H04N 1/047;**
G01J 2005/0077; G01J 2005/202; H04N 23/20

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Basler AG**
**22926 Ahrensburg (DE)**

(72) Erfinder: **WINGERT, Julian**
**25421 Pinneberg (DE)**

(74) Vertreter: **Bird & Bird LLP**
**Am Sandtorkai 50**
**20457 Hamburg (DE)**

(54) **SYSTEM UND VERFAHREN ZUR ERMITTLUNG EINES WÄRMEBILDS EINES BEWEGTEN OBJEKTS**

(57)    Die Erfindung betrifft ein System (2) zur Ermittlung eines Wärmebilds eines Objekts (4). Das System (2) weist ein Detektorarray (6), eine Prozessoreinheit (8) und eine Signalschnittstelle (10) auf. Das Detektorarray (6) weist eine Vielzahl von bolometrischen Messzellen (12) auf, die gemäß einer Matrixstruktur (14) in Zeilen (16) und Spalten (18) angeordnet sind, so dass in jeder Zeile (16) mehrere Messzellen (12) hintereinander angeordnet sind und in jeder Spalte (18) mehrere Messzellen (12) hintereinander angeordnet sind. Jeder Messzelle (12) ist ein Erfassungsbereich (20) zugeordnet. Außerdem ist jede Messzelle (12) zur Erfassung von Infrarotstrahlung im zugehörigen Erfassungsbereich (20) der

jeweiligen Messzelle (12) ausgebildet. Das Detektorarray (6) ist über eine Signalverbindung (40) mit der Prozessoreinheit (8) gekoppelt. Die Prozessoreinheit (8) ist konfiguriert, jedem Oberflächenabschnitt (22) die Messwertgruppen der mehreren Messwertgruppen zuzuordnen, deren Messwerte M die Temperatur des jeweiligen, gleichen Oberflächenabschnitts (22) repräsentieren. Außerdem ist die Signalschnittstelle (10) vorzugsweise dazu ausgebildet, ein Bildsignal B bereitzustellen, das das Wärmebild des Objekts (4) repräsentiert. Darüber hinaus betrifft die Erfindung ein Verfahren zur Ermittlung eines Wärmebilds eines bewegten Objekts (4) mittels des beschriebenen Systems (2).

Fig. 3

**Beschreibung**

Die Erfindung betrifft ein System und ein Verfahren, die jeweils der Ermittlung eines Wärmebilds eines bewegten Objekts dienen.

Aus dem Stand der Technik sind Systeme und Verfahren zur Ermittlung eines Wärmebilds eines Objekts grundsätzlich bekannt. Derartige Systeme können beispielsweise von einer Wärmebildkamera gebildet sein oder zumindest eine Wärmebildkamera aufweisen. Mittels eines derartigen Systems zur Ermittlung eines Wärmebilds kann Infrarotstrahlung über einen Detektorarray des Systems erfasst werden, um ein Wärmebild basierend auf der mittels des Detektorarrays erfassten Infrarotstrahlung zu erzeugen. Der Wellenlängenbereich der Infrarotstrahlung, die von dem Detektorarray erfassbar ist, ist vorzugsweise zwischen 3 Mikrometer und 20 Mikrometer. Mittels der bekannten Systeme kann beispielsweise die Temperatur eines bewegten Objekts erfasst werden.

Ein Detektorarray eines Systems wird oftmals auch als ein Detektor oder als ein Wärmebildsensor bezeichnet. Das Detektorarray weist eine Vielzahl von bolometrischen Messzellen auf, die in einer Matrixstruktur in Zeilen und Spalten angeordnet sind. Die Messzellen können an einem gemeinsamen Grundkörper des Detektorarrays befestigt sein, so dass bei der Erfassung von Infrarotstrahlung zumindest ein kleiner Teil von Wärme von den Messzellen zu dem Grundkörper gelangen kann. Auch in umgekehrter Richtung, also vom Grundkörper zu den Messzellen kann ein kleiner Wärmestrom entstehen. Beide zuvor genannten Effekte können zu einer Beeinträchtigung der Erfassung der Infrarotstrahlung mittels der Messzellen führen. Der Grundkörper weist eine Wärmekapazität auf. Jeder Messzelle kann ein Teil des Grundkörpers und/oder ein Teil der zugehörigen Wärmekapazität zugeordnet sein. Das Messprinzip einer Messzelle basiert auf der Absorption von Infrarotstrahlung und der Erwärmung der jeweiligen bolometrischen Messzelle. Jede bolometrische Messzelle kann deshalb eine thermische Kapazität aufweisen. Diese thermische Kapazität der jeweiligen Messzelle repräsentiert einen Wert für die Menge an thermischer Energie, die von der jeweiligen bolometrischen Messzelle gespeichert werden kann. Jede bolometrische Messzelle kann außerdem durch einen thermischen Widerstand repräsentiert sein. Der thermische Widerstand der jeweiligen Messzelle kann einen Wärmekennwert und/oder ein Maß für eine Temperaturdifferenz repräsentieren, die in der jeweiligen Messzelle beim Hindurchtreten eines Wärmestroms entsteht. Aufgrund des thermischen Widerstands und/oder der thermischen Kapazität der jeweiligen bolometrischen Messzelle ist jede bolometrische Messzelle vorzugsweise als ein Zeitverzögerungsglied, insbesondere ein Zeitverzögerungsglied erster Ordnung mit einer Zeitkonstante, ausgebildet. Die Zeitverzögerung bezieht sich dabei auf die Zeitverzögerung des von der jeweiligen Messzelle erzeugten Messwerts in Bezug zu der auf die jeweilige Messzelle eintreffenden und zu messenden Infrarotstrahlung. Vereinfacht kann jede bolometrische Messzelle eine gewisse Messträgheit gegenüber einer sich in ihrer Intensität und/oder Wellenläge ändernden Infrarotstrahlung aufweisen. Bevorzugt ist jede bolometrische Messzelle dazu ausgebildet, Infrarotstrahlung im Wellenlängenbereich des Nah-, Mittel- und/oder Ferninfrarotwellenlängenbereichs zu erfassen.

Aufgrund der zuvor genannten Messträgheit kann die Temperatur von bewegten Objekten mit bekannten Systemen zur Ermittlung eines Wärmebilds nur mit einer sehr hohen Fehlerrate erfasst werden. Denn die Dauer, während ein bewegtes Objekt in einem Erfassungsbereich einer Messzelle ist, reicht oftmals nicht aus, um die träge, bolometrische Messzelle mit der von dem Objekt ausgestrahlten Infrarotstrahlung in der Art zu beeinflussen, dass der von der Messzelle erzeugte Messwert die tatsächliche Temperatur des Objekts repräsentiert. Wird die Temperatur an einer Stelle des Objekts von einer Messzelle des Detektorarrays des Systems erfasst, so besteht darüber hinaus das Problem, dass eine einzelne Messung fehlerhaft sein kann.

Der Erfindung liegt deshalb die Aufgabe zugrunde, ein System und/oder ein Verfahren zur möglichst präzisen Ermittlung eines Wärmebilds eines bewegten Objektes bereitzustellen.

Gemäß einem ersten Aspekt der Erfindung wird die Aufgabe gelöst durch ein System mit den Merkmalen des Anspruchs 1. Vorgesehen ist also ein System zur Ermittlung eines Wärmebilds eines Objekts. Das System weist ein Detektorarray, eine Prozessoreinheit und eine Signalschnittstelle auf. Das Detektorarray weist eine Vielzahl von bolometrischen Messzellen auf, die gemäß einer Matrixstruktur in Zeilen und Spalten angeordnet sind, so dass in jeder Zeile mehrere Messzellen hintereinander angeordnet sind und in jeder Spalte in einer Spaltenrichtung mehrere Messzellen hintereinander angeordnet sind. Jeder Messzelle ist ein Erfassungsbereich zugeordnet. Außerdem ist jede Messzelle zur Erfassung von Infrarotstrahlung im zugehörigen Erfassungsbereich der jeweiligen Messzelle ausgebildet. Außerdem ist jede Messzelle basierend auf der von der jeweiligen Messzelle erfassten Infrarotstrahlung zur Erzeugung eines Messwerts ausgebildet, der eine Temperatur im zugehörigen Erfassungsbereich der jeweiligen Messzelle repräsentiert. Das System ist ausgebildet, das Detektorarray derart zu steuern, um die Infrarotstrahlung im Erfassungsbereich einer jeden Messzelle einer gemeinsamen Spalte derart periodisch zu erfassen und zugehörige Messwerte zu erzeugen, während ein Objekt in der Spaltenrichtung der Spalten an dem Detektorarray vorbeibewegt wird und jede Spalte dadurch in Spaltenrichtung über einen jeweils zugeordneten Oberflächenstreifen des Objekts hinwegbewegt wird, so dass für jede gemeinsame Spalte gilt, dass die Messzellen der jeweiligen gemeinsamen Spalte jeweils (a) zum einen die Infrarotstrahlung von jedem Oberflächenabschnitt einer Mehrzahl von Oberflächenabschnitten des der jeweiligen Spalte zugeordneten Oberflächenstreifens des Objekts mehrfach erfassen und dadurch (b) zum anderen mehrere Messwerte für jeden Oberflächenabschnitt des der jeweiligen gemeinsamen Spalte zugeordneten Oberflächenstreifens des Objekts erzeugen.

Jede Mehrzahl der von der gleichen Messzelle erzeugten Messwerte, die sich auf den gleichen Oberflächenabschnitt beziehen, bildet eine Messwertgruppe für den jeweiligen Oberflächenabschnitt. Das Detektorarray ist über eine Signalverbindung mit der Prozessoreinheit gekoppelt, um die von den Messzellen erzeugten Messwerte an die Prozessoreinheit zu übertragen. Die Prozessoreinheit ist konfiguriert, jedem Oberflächenabschnitt die Messwertgruppen der mehreren Messwertgruppen zuzuordnen, deren Messwerte die Temperatur des jeweiligen, gleichen Oberflächenabschnitts repräsentieren. Die Prozessoreinheit ist außerdem konfiguriert, basierend auf jeder Messwertgruppe jeweils eine Prädiktionstemperatur als Vorhersagetemperatur für die tatsächliche Temperatur am jeweils zugeordneten Oberflächenabschnitt des Objekts zu ermitteln, so dass für jeden Oberflächenabschnitt des Objekts mehrere Prädiktionstemperaturen ermittelt werden. Die Prozessoreinheit ist außerdem konfiguriert, einen Temperaturmittelwert für jeden Oberflächenabschnitt aus den Prädiktionstemperaturen für den jeweiligen Oberflächenabschnitt zu ermitteln. Bevorzugt ist die Prozessoreinheit außerdem konfiguriert, ein Wärmebild des Objekts basierend auf den Temperaturmittelwerten für die Oberflächenabschnitte des Objekts zu ermitteln. Außerdem ist die Signalschnittstelle vorzugsweise dazu ausgebildet, ein Bildsignal bereitzustellen, das das Wärmebild des Objekts repräsentiert.

Bezüglich des Detektorarrays und der Messzellen wird auf die eingangs wiedergegebenen Erläuterungen in analoger Weise Bezug genommen. Das Detektorarray weist eine Vielzahl von bolometrischen Messzellen auf. Diese Vielzahl kann die gesamte Anzahl der bolometrischen Messzellen des Detektorarrays bilden und/oder sein. Jedoch ist es auch möglich, dass die Vielzahl von bolometrischen Messzellen des Detektorarrays eine Teilmenge aller bolometrischen Messzellen des Detektorarrays bildet und/oder ist. Wenn im Folgenden auf eine bolometrischen Messzelle des Detektorarrays Bezug genommen wird, ist damit vorzugsweise eine Messzelle und/oder jede der Messzellen der genannten Vielzahl der Messzellen des Detektorarrays gemeint. Das Detektorarray kann beispielsweise mehr als 100 bolometrische Messzellen, vorzugsweise mehr als 1000 bolometrische Messzellen aufweisen.

Das Detektorarray kann einen Grundkörper aufweisen. Vorzugsweise ist jede Messzelle über eine zugehörige Verbindung direkt oder indirekt mit dem Grundkörper verbunden. Die jeweilige Verbindung weist eine Wärmeleitfähigkeit auf, so dass ein Teil der Wärme, die per Infrarotstrahlung in die jeweilige Messzelle eingeleitet wird, über die zugehörige Verbindung der jeweiligen Messzelle zu dem Grundkörper übertragbar ist. Der Grundkörper hat eine vorbestimmte thermische Wärmekapazität. Durch die Verbindung der jeweiligen Messzelle zum Grundkörper, die Wärmeleitfähigkeit der jeweiligen Verbindung und die thermische Wärmekapazität des Grundkörpers wirkt die jeweilige Messzelle wie ein Zeitverzögerungsglied mit einer Zeitkonstante zur Erzeugung eines die erfasste Infrarotstrahlung repräsentierenden Messwerts. Trifft Infrarotstrahlung auf eine Messzelle, so bestimmt nämlich die Wärmeleitfähigkeit der zugehörigen Verbindung, wie schnell Wärme von der Messzelle an den Grundkörper übertragen werden kann. Der daraus resultierende Wärmestrom von der Messzelle zum Grundkörper verursacht einen Temperaturanstieg des Grundkörpers. Dieser Anstieg ist im Verlauf exponentiell. Mit anderen Worten lädt sich der Grundkörper mit einem exponentiellen Verlauf mit Wärme auf. Jeder Messwert ist vorzugsweise eine Messgröße. Sie kann von einer Messzelle (vorzugsweise mit einem zugehörigen Teil des Grundkörpers) des Detektorarrays erzeugt werden. Eine Messgröße kann beispielsweise eine elektrische Spannung, ein elektrischer Strom, ein digitaler Wert oder dergleichen sein. Vorzugsweise ist jeder Messwert ein digitaler Messwert. Zur Erzeugung des Messwerts kann das Detektorarray einen Analog-Digital-Wandler aufweisen. Jeder digitale Messwert kann in Form von Daten gespeichert und/oder verarbeitet werden. Jede Messzelle erzeugt einen Messwert basierend auf der von der jeweiligen Messzelle erfassten Infrarotstrahlung. So kann die Messzelle beispielsweise ausgebildet sein, den Messwert proportional zur Intensität der erfassten Infrarotstrahlung zu erzeugen, vorzugsweise jedoch mit einer Zeitverzögerung.

Jede bolometrische Messzelle der Vielzahl der Messzellen des Detektorarrays ist vorzugsweise als ein Verzögerungsglied mit einer Zeitkonstante ausgebildet. Somit kann jede bolometrische Messzelle der genannten Vielzahl der Messzellen des Detektorarrays als ein Verzögerungsglied erster Ordnung ausgebildet sein. Dies gilt zumindest bei einer vereinfachten Betrachtung der jeweiligen Messzelle. Grundsätzlich ist es jedoch auch möglich, dass jede bolometrische Messzelle als ein Verzögerungsglied einer höheren Ordnung ausgebildet ist. Bevorzugt wird jedoch ein Verzögerungsglied erster Ordnung für die jeweilige Messzelle betrachtet. Die Verzögerung tritt zwischen dem Auftreten einer Intensitätsänderung der Infrarotstrahlung an der Messzelle und dem von der jeweiligen Messzelle erzeugten Messwert auf. Jeder von der jeweiligen Messzelle erzeugter Messwert ist deshalb zeitverzögert. Die Zeitkonstante eines Verzögerungsglieds beschreibt hierbei die charakteristische Verzögerung. Die Zeitkonstante einer jeweiligen Messzelle kann beispielsweise durch das Produkt aus dem thermischen Widerstand der zu der jeweiligen Messzelle zugehörigen Verbindung und der thermischen Kapazität der jeweiligen Messzelle bestimmt sein. Der thermische Widerstand der jeweiligen Verbindung ist der Kehrwert der thermischen Leitfähigkeit der jeweiligen Verbindung.

Der Grundkörper kann eine Ausleseschaltung aufweisen, die zur Erzeugung des Messwerts der jeweiligen Messzelle ausgebildet ist. Der Grundkörper kann Siliziummaterial und/oder weitere Bauteile umfassen. Oftmals ist der Grundkörper durch ein Vakuum von den Messzellen beabstandet, wobei die Verbindungen zwischen den Messzellen und dem Grundkörper durch das Vakuum hindurchragen. Die thermisch leitfähige Verbindung zwischen den Messzellen und dem Grundkörper ist deshalb zumindest im Wesentlichen oder ausschließlich durch die zuvor genannten Verbindungen zwischen den Messzellen und dem Grundkörper gebildet. Das Vakuum zwischen den Messzellen und dem Grundkörper hat hingegen eine thermisch isolierende Wirkung. Außerdem kann es vorgesehen sein, dass auf dem Grundkörper jeweils ein Reflektor gegenüber zu jeder Rückseite der Messzelle angeordnet ist, so dass Infrarotstrahlung, die die Messzelle durchdringt, an den jeweiligen Reflektor reflektiert werden kann, um wieder auf die Messzelle geleitet zu werden. Derartige Reflektoren sind also zur Reflektion von Infrarotstrahlung ausgebildet.

Jeder Messzelle kann ein eigener und/oder dedizierter Erfassungsbereich zugeordnet sein, der sich von der Außenfläche der jeweiligen Messzelle orthogonal und/oder schräg nach außen erstreckt. Jeder Erfassungsbereich kann einen zylindrischen Raum mit einer Grundfläche bilden, der der Außenfläche der jeweiligen Messzelle entspricht. Alle Erfassungsbereiche können gleich ausgebildet sein, insbesondere dann, wenn die Messzellen ebenfalls jeweils gleich ausgebildet sind. Hat eine Messzelle beispielsweise eine rechteckige Grundfläche, so kann sich der Erfassungsbereich, der der jeweiligen Messzelle zugeordnet ist, durch einen zylindrischen Raum bilden, der ebenfalls eine rechteckige Grundfläche aufweist. Die Erfassungsbereiche der Messzellen können sich überlappen. Dies kann insbesondere dann der Fall sein, wenn die den Messzellen zugeordneten Erfassungsbereiche kegelförmig oder kegelstumpfförmig sind.

Die Messzellen des Detektorarrays sind matrixförmig in Zeilen und Spalten angeordnet. Die Anordnung der Zeilen und Spalten des Detektorarrays kann entweder zu der physischen Anordnung der Messzellen in Zeilen und Spalten oder umgekehrt, nämlich zu der physischen Anordnung von Spalten und Zeilen korrespondieren. Die Richtung, in der mehrere Messzellen einer gemeinsamen Spalte hintereinander angeordnet sind, wird als Spaltenrichtung bezeichnet. Vor dem Hintergrund der vorangegangenen Erläuterungen kann unter der Spaltenrichtung beispielsweise die Richtung verstanden werden, in der mehrere Messzellen entweder in einer gemeinsamen, physischen Spalte oder in einer gemeinsamen, physischen Zeile hintereinander angeordnet sind. Mit anderen Worten kann die Spaltenrichtung entweder durch die tatsächliche Spaltenrichtung oder durch die tatsächliche Zeilenrichtung bestimmt sein. Zuvor und im Weiteren wird deshalb vereinfacht von der Spaltenrichtung gesprochen, obwohl diese alternativ in analoger Weise durch die Zeilenrichtung bestimmt oder ersetzt sein kann.

Außerdem ist das System ausgebildet, das Detektorarray derart zu steuern, um die Infrarotstrahlung im Erfassungsbereich einer jeden Messzelle einer gemeinsamen Spalte mittels der jeweiligen Messzelle periodisch zu erfassen und zugehörige Messwerte zu erzeugen, während ein Objekt in der Spaltenrichtung der Spalten an dem Detektorarray vorbeibewegt wird und jede Spalte dadurch in Spaltenrichtung über einen jeweils zugeordneten Oberflächenstreifen des Objekts hinwegbewegt wird. Zur Steuerung des Detektorarrays kann das System eine Steuereinheit aufweisen. Die Steuereinheit kann mit dem Detektorarray über eine Steuersignalverbindung gekoppelt sein, um Steuersignale von der Steuereinheit an das Detektorarray zu übertragen. Die Messzellen des Detektorarrays können über die Steuersignale derart kontrolliert sein, um Infrarotstrahlung im jeweiligen Erfassungsbereich zu erfassen und basierend hierauf einen Messwert zu erzeugen. Über die Steuersignale kann die Steuereinheit auch die Wiederholrate einer Erfassung von Infrarotstrahlung im Erfassungsbereich mittels jeder der Messzellen steuern. Deshalb kann die Steuereinheit auch dazu ausgebildet sein, die Messzellen derart zu steuern, um die Infrarotstrahlung im Erfassungsbereich einer jeden Messzelle periodisch mit einer vorbestimmten Wiederholrate zu erfassen.

Jedes Detektorarray kann mehrere Spalten und mehrere Zeilen umfassen. In jeder Spalte sind in Spaltenrichtung des Detektorarrays mehrere Messzellen hintereinander angeordnet. In analoger Weise können in jeder Zeile in einer zugehörigen Zeilenrichtung des Detektorarrays mehrere Messzellen hintereinander angeordnet sein. Vorzugsweise ist die Zeilenrichtung orthogonal zur Spaltenrichtung. Jede Messzelle des Detektorarrays kann sowohl einer Spalte als auch einer Zeile zugeordnet sein. Sofern das Detektorarray mehrere Spalten aufweist, erstreckt sich jede der Spalten in Spaltenrichtung des Detektorarrays. Die Messzellen, die der gleichen Spalte der mehreren Spalten des Detektorarrays zugeordnet sind, werden auch als die Messzellen der gemeinsamen Spalte bezeichnet.

Ein Objekt kann in der Spaltenrichtung des Detektorarrays vorbei bewegt werden, indem sich das Objekt in einer Ebene parallel zum Detektorarray, jedoch in der gleichen Spaltenrichtung, in der auch die Spalten des Detektorarrays ausgerichtet sind, bewegt. So kann das Objekt beispielsweise unterhalb des Detektorarrays vorbei bewegt werden und dabei sequenziell durch die Erfassungsbereiche der Messzellen hindurchbewegt werden, die einer gemeinsamen Spalte zugeordnet sind.

Wird ein Objekt in Spaltenrichtung an dem Detektorarray vorbei bewegt, so gelangt ein Streifen an der Oberfläche des Objekts sequenziell in jeden Erfassungsbereich der Messzellen einer gemeinsamen Spalte. Dieser Streifen an der Oberfläche des Objekts wird als Oberflächenstreifen des Objekts bezeichnet und ist der gemeinsamen Spalte des Detektorarrays zugeordnet. Sofern das Detektorarray mehrere parallel angeordnete Spalten aufweist, kann eine entsprechende Anzahl von Streifen an der Oberfläche des Objekts jeweils sequenziell in den Erfassungsbereich der Spalten bzw. der zugehörigen Messzellen gelangen. Für jede Spalte des Detektorarrays kann somit ein jeweils zugeordneter Oberflächenstreifen des Objekts vorgesehen sein.

Da der Oberflächenstreifen des Objekts insbesondere bei sehr großen Objekten oftmals nicht vollständig in den Erfassungsbereich einer einzelnen Messzelle passt, ist es vorgesehen, dass jeder Oberflächenstreifen des Objekts logisch in mehrere, zugehörige und hintereinander angeordnete Oberflächenabschnitte unterteilt ist.

Die periodische Erfassung der Infrarotstrahlung im Erfassungsbereich einer jeden Messzelle einer gemeinsamen Spalte mittels der jeweiligen Messzelle wird dabei von dem System derart gesteuert, so dass, je gemeinsamer Spalte, die Messzellen der jeweiligen gemeinsamen Spalte jeweils die Infrarotstrahlung von jedem Oberflächenabschnitt der Mehrzahl von Oberflächenabschnitten des der jeweiligen Spalte zugeordneten Oberflächenstreifens des Objekts mehrfach erfassen. Vorzugsweise wird die Wiederholungsrate zur periodischen Erfassung der Infrarotstrahlung derart von dem System, insbesondere einer zugehörigen Steuereinheit, gesteuert, sodass jede Messzelle die Infrarotstrahlung von jedem Oberflächenabschnitt, der in den Erfassungsbereich der jeweiligen Messzelle gelangt, erfasst. Aufgrund der Bewegung des Objekts in Spaltenrichtung gelangt jeder Oberflächenabschnitt eines Oberflächenstreifens des Objekts sequenziell in den Erfassungsbereich jeder der Messzellen der Spalte, dem der jeweilige Oberflächenstreifen zugeordnet ist. Hieraus resultiert, dass jede Messzelle für jeden Oberflächenabschnitt dieses Oberflächenstreifens mehrere Messwerte erzeugt, die jeweils die Infrarotstrahlung des jeweiligen Oberflächenabschnitts repräsentiert.

Die periodische Erfassung der Infrarotstrahlung im Erfassungsbereich einer jeden Messzelle einer gemeinsamen Spalte mittels der jeweiligen Messzelle wird von dem System deshalb derart gesteuert, so dass, je gemeinsamer Spalte, die Messzellen der jeweiligen gemeinsamen Spalte jeweils mehrere Messwerte für jeden Oberflächenabschnitt des der jeweiligen gemeinsamen Spalte zugeordneten Oberflächenstreifens des Objekts erzeugen.

Wird ein Objekt in Spaltenrichtung an dem Detektorarray vorbeigeführt, wird die von dem Objekt abgegebene Infrarotstrahlung nacheinander und/oder teilweise zeitparallel von den Messzellen aus einer Spalte des Detektorarrays erfasst. Wie bereits zuvor erläutert, ist es dabei vorzugsweise vorgesehen, dass jede Messzelle dieser gemeinsamen Spalte die Infrarotstrahlung in dem Erfassungsbereich der jeweiligen Messzelle derart periodisch erfasst, so dass jede dieser Messzellen Infrarotstrahlung des gleichen Oberflächenabschnitts mehrfach erfasst, so dass jede Messzelle eine Mehrzahl von Messwerten erzeugt, die jeweils die Infrarotstrahlung des gleichen Oberflächenabschnitts repräsentieren. Vereinfacht ausgedrückt ist die Wiederholungsrate zur Erfassung der Infrarotstrahlung einer jeden Messzelle vorzugsweise derart hoch eingestellt, dass eine "Überabtastung" stattfindet und die daraus entstehende Mehrzahl der erzeugten Messwerte die Infrarotstrahlung des gleichen Oberflächenabschnitts des Objekts repräsentieren.

Eine Mehrzahl von mittels der gleichen Messzelle erzeugten Messwerten, die jeweils eine Infrarotstrahlung des gleichen Oberflächenabschnitts repräsentieren, bildet vorzugsweise eine Messwertgruppe für den jeweiligen Oberflächenabschnitt. Durch die Bewegung des Objekts in Spaltenrichtung gelangt ein Oberflächenabschnitt eines Oberflächenstreifens des Objekts nacheinander von Erfassungsbereich zu Erfassungsbereich, die zu den in Spaltenrichtung hintereinander angeordneten Messzellen der gleichen Spalte des Detektorarrays gehören. Von jeder der Messzellen der gleichen Spalte kann also eine Messwertgruppe für jeden Oberflächenabschnitt einer Mehrzahl von Oberflächenabschnitten eines Oberflächenstreifens gebildet werden, die der Spalte des Detektorarrays zugeordnet ist.

Die Messwerte, die von den Messzellen des Detektorarrays erzeugt werden, können von dem Detektorarray über die Signalverbindung zwischen dem Detektorarray und der Prozessoreinheit an die Prozessoreinheit übertragen werden. Die Signalverbindung kann durch eine elektrische Leitung, vorzugsweise mit mehreren Adern, oder durch eine Funk-Verbindung ausgebildet sein. Das Detektorarray kann ausgebildet sein, ein Messsignal an die Prozessoreinheit über die Signalverbindung zu übertragen. Das Messsignal kann die von den Messzellen erzeugten Messwerte repräsentieren. Die Messwerte können einzeln von dem Detektorarray an die Prozessoreinheit übertragen werde. Es ist jedoch auch möglich, dass Messdaten in Messwertgruppen, die eine Mehrzahl von Messdaten umfassen, mittels der Signalverbindung von dem Detektorarray an die Prozessoreinheit übertragen werden.

Die Prozessoreinheit ist konfiguriert, jedem Oberflächenabschnitt des Objekts die Mehrzahl der Messgruppen zuzuordnen, deren Messwerte jeweils eine Temperatur des jeweiligen, gleichen Oberflächenabschnitts des Objekts repräsentieren.

Das System kann ausgebildet sein, um eine Transportgeschwindigkeit, mit der das Objekt in Spaltenrichtung bewegt wird, zu erfassen. Die Transportgeschwindigkeit des Objekts, eine Breite des Erfassungsbereichs einer Messzelle in Spaltenrichtung sowie die Wiederholungsrate der periodischen Erfassung der Infrarotstrahlung im Erfassungsbereich der Messzelle bestimmen, wie oft die Infrarotstrahlung eines Oberflächenabschnitts eines Oberflächenstreifens des Objekts, der in Spaltenrichtung durch den Erfassungsbereich der Messzelle geführt wird, erfasst werden kann. Umso höher die Wiederholungsrate ist, desto höher ist die Anzahl der von der Messzelle erzeugten Messwerte, die jeweils die erfasste Infrarotstrahlung des jeweiligen Oberflächenabschnitts repräsentieren. Außerdem steigt die Anzahl der von der Messzelle erzeugten Messwerte, wenn die Transportgeschwindigkeit des Objekts in Spaltenrichtung verkleinert wird. Umso größer die Breite des Erfassungsbereichs der Messzellen in Spaltenrichtung ist, desto größer ist die Anzahl der möglichen Messwerte, die jeweils die erfasste Infrarotstrahlung des jeweiligen Oberflächenabschnitts repräsentieren.

Wie zuvor außerdem bereits erläutert worden ist, ist das System vorzugsweise dazu ausgebildet, um die Wiederholungsrate zur periodischen Erfassung der Infrarotstrahlung mittels der Messzellen zu steuern. Somit kann das System und insbesondere die zugehörige Prozessoreinheit auf die Wiederholungsrate zugreifen. Außerdem ist vorzugsweise die Breite des Erfassungsbereichs einer jeden Messzelle in Spaltenrichtung von dem System gespeichert. Die Prozessoreinheit ist vorzugsweise dazu ausgebildet, um auf die gespeicherte Breite des Erfassungsbereichs zuzugreifen. Vor diesem Hintergrund liegen der Prozessoreinheit des Systems vorzugsweise alle relevanten Informationen vor, um die Anzahl der von einer Messzelle erzeugbaren Messwerte zu bestimmen, die jeweils eine erfasste Infrarotstrahlung des gleichen Oberflächenabschnitts repräsentieren. Basierend auf der von dem System ermittelbaren Anzahl der von der Messzelle erzeugbaren Messwerten für den gleichen Oberflächenabschnitt ist die Prozessoreinheit vorzugsweise dazu ausgebildet, um die von den Messzellen erzeugten und von dem Detektorarray an die Prozessoreinheit übertragenen Messwerte in Messwertgruppen aufzuteilen, sodass jede Messwertgruppe von mehreren Messwerten gebildet ist, die jeweils die von der gleichen Messzelle erfasste Infrarotstrahlung des gleichen Oberflächenabschnitts des Objekts repräsentieren.

Darüber hinaus kann es vorgesehen sein, dass jeder Messwert, der von dem Detektorarray an die Prozessoreinheit übertragen wird, sowohl die jeweils erfasste Infrarotstrahlung repräsentiert als auch die zur Erfassung der Infrarotstrahlung verwendete Messzelle identifiziert, den Zeitpunkt der Erfassung identifiziert und/oder den Oberflächenabschnitt identifiziert, dessen Infrarotstrahlung von dem Messwert repräsentiert wird. Jeder Messwert kann somit zusätzlich zur erfassten Infrarotstrahlung weitere Informationen repräsentieren, die eine Zuordnung von mehreren Messwerten zu einer gemeinsamen Messwertgruppe erlauben. Die Prozessoreinheit kann deshalb anhand der von einem Messwert gegebenenfalls neben der erfassten Infrarotstrahlung repräsentierten Information ausgebildet sein, um die von den Messzellen erzeugten und von dem Detektorarray an die Prozessoreinheit übertragenen Messwerte in Messwertgruppen aufzuteilen, sodass jede Messwertgruppe von mehreren Messwerten gebildet ist, die jeweils die von der gleichen Messzelle erfasste Infrarotstrahlung des gleichen Oberflächenabschnitts des Objekts repräsentieren.

Eine Messwertgruppe umfasst mindestens zwei Messwerte der Infrarotstrahlung des gleichen Oberflächenabschnitts des Objekts. Jeder Messwert repräsentiert eine Temperatur, so dass die Messwerte einer Messwertgruppe mindestens zwei Temperaturen für den jeweiligen Oberflächenabschnitt repräsentieren.

Bevorzugt ist es vorgesehen, dass jede Messzelle Infrarotstrahlung im zugehörigen Erfassungsbereich periodisch erfasst. So kann jede Messzelle die Infrarotstrahlung beispielsweise mit einer Abtastfrequenz von 50 Hz erfassen. Somit wird die Infrarotstrahlung 50 mal pro Sekunde von der jeweiligen Messzelle erfasst und mit jeder Erfassung wird von der Messzelle ein Messwert erzeugt. Die Messwerte können mit der gleichen Frequenz wie die Abtastfrequenz erzeugt werden.

Da jede Messzelle vorzugsweise als ein Zeitverzögerungsglied ausgebildet ist, tritt eine Verzögerung zwischen dem Auftreten einer Intensitätsänderung der Infrarotstrahlung, die auf die Messzelle einwirkt, und dem von der jeweiligen Messzelle erzeugten Messwert auf. Daraus resultiert auch eine Zeitverzögerung zwischen der tatsächlichen Temperatur des Oberflächenabschnitts des Objekts, das im Messbereich ist, und dem Messwert der jeweiligen Messzelle. Es ist deshalb wünschenswert, einen Prädiktionswert zu ermitteln, der eine um die Zeitverzögerung kompensierte Vorhersagetemperatur im Erfassungsbereich der jeweiligen Messzelle repräsentiert. Diese Vorhersagetemperatur ist somit auch eine Vorhersage für die Temperatur des Oberflächenabschnitts des Objekts. Um eine Kompensation der Zeitverzögerung zu erreichen, wird auf die Erkenntnisse zurückgegriffen, dass ein exponentieller Verlauf der Messwerte einer Messzelle bei einer sprunghaften Änderung der Intensität der Infrarotstrahlung im Messbereich der jeweiligen Messzelle auftritt und somit in entsprechender Weise vorhersagbar ist. Dies gilt insbesondere dann, wenn die Messzelle als Zeitverzögerungsglied erster Ordnung ausgebildet ist. In diesem Zusammenhang wird vorzugsweise auf die entsprechenden Erläuterungen zur Bestimmung einer Vorhersagetemperatur Bezug genommen, wie sie aus der Publikation EP 3 789 743 A1 zu entnehmen sind.

Gelangt ein Objekt aufgrund der Bewegung in Spaltenrichtung erstmals in einen Erfassungsbereich einer Messzelle, so wird diese bolometrische Messzelle sprunghaft mit einer Infrarotstrahlung von einem Oberflächenabschnitt des Objekts beaufschlagt. Die zeitlich aufeinander folgenden Messwerte bei der periodischen Erfassung der Infrarotstrahlung von dem Oberflächenabschnitt des Objekts können vorausgesagt werden, da sie den allgemein bekannten, charakteristischen Verlauf einer Sprungantwort eines Zeitverzögerungsglieds, insbesondere eines Verzögerungsglieds erster Ordnung, aufzeigen werden. Aufgrund dieser Erkenntnis ist es möglich, dass zwei aufeinander folgende Messwerte, vorzugsweise die ersten beiden Messwerte, einer Messzelle in Reaktion auf den sprunghaften Verlauf der Intensität der Infrarotstrahlung verwendet werden, um eine Vorhersage über die Größe des Messwerts in einem Gleichgewichtszustands der Messzelle zu ermitteln. Dieser Gleichgewichtszustand liegt in der Praxis bei 4 bis 5 Tau vor, also bei dem vierfachen bis fünffachen der Zeitkonstante eines Zeitverzögerungsglieds. Die Zeitkonstante einer Messzelle kann vorbestimmt sein. In dem Gleichgewichtszustand entspricht die Größe des Messwerts, vorzugsweise bis auf eine sehr kleine Abweichung, der statischen und/oder realen Größe des Messwerts als Reaktion auf den sprunghaften Anstieg der Infrarotstrahlung. Da der grundsätzliche Verlauf einer Sprungantwort eines Verzögerungsglieds bei einem sprunghaften Anstieg der Einheitsgröße bekannt ist, kann bereits aus der Erkenntnis von zwei, vorzugsweise aufeinander folgenden, Messwerten einer Messzelle eine Voraussagewert ermittelt werden, der dem Messwert nach dem Vierfachen oder dem Fünffachen der Zeitkonstante der jeweiligen Messzelle entspricht. Die Prozessoreinheit ist deshalb dazu konfiguriert, basierend auf jeder Messwertegruppe, die mindestens zwei Messwerte umfasst, jeweils einen Prädiktionswert als Voraussagetemperatur für die tatsächliche Temperatur am jeweils zugeordneten Oberflächenabschnitt des Objekts zu ermitteln. Basierend auf den vorangegangenen Überlegungen, dass der grundsätzliche Verlauf einer Sprungantwort bei einem Verzögerungsglied voraussagbar ist, kann vereinfacht betrachtet mit einer vorbestimmten Kenngröße und einer Differenz zwischen zwei zeitlich aufeinander folgenden Messwerten der Messwertgruppe eine Voraussage darüber getroffen werden, welche Größe der Messwert nach dem Vierfachen oder Fünffachen der Zeitkonstante haben wird. In der Praxis ist oftmals keine Zeit, um tatsächlich das Vier- oder Fünffache der Zeitkonstante der jeweiligen Messzelle zu warten, um die Temperatur an einem Oberflächenabschnitt des Objekts zu bestimmen. Denn das Objekt wird an dem Detektorarray nur kurz und/oder unterbrechungsfrei vorbeibewegt, um zu einem Zielort zu gelangen. Insbesondere wird das Objekt nicht an dem Detektorarray angehalten, um eine ausreichend lange Messung auszuführen, bis ein Gleichgewichtszustand erreicht ist. Eine besonders einfache Ermittlung einer Prädiktionstemperatur mittels der Prozessoreinheit kann auf der Erkenntnis basieren, dass die Kenngröße mit einem Wert zwischen 0,5 und 0,8, insbesondere mit einem Wert von 0,632, gespeichert ist. Durch zwei aufeinander folgende Messwerte aus einer Messgröße und der Kenngröße kann die Prozessoreinheit somit besonders einfach und schnell die Prädiktionstemperatur ermitteln. So kann die Prozessoreinheit beispielsweise konfiguriert sein, basierend auf jeder Messwertgruppe, die mindestens einen zugehörigen ersten Messwert M1 und einen zugehörigen zweiten Messwert M2 aufweist, jeweils eine Prädiktionstemperatur P als Vorhersagetemperatur für die tatsächliche Temperatur am jeweils zugeordneten Oberflächenabschnitt des Objekts gemäß der nachstehenden Formel zu ermitteln:

$$P = T_1(M_1) + (D \,/\, Tau) * (T_2(M_2) - T_1(M_1)) * K$$

Jedes der beiden Messwerte M1, M2 repräsentiert eine Temperatur T1, T2, so dass der Term $T_2(M_2)$ die von dem zweiten Messwert repräsentierte Temperatur T2 und der Term $T_1(M_1)$ die von dem ersten Messwert repräsentierte Temperatur T1 angibt. Der Term D ist die Zeit, insbesondere die Periodendauer, zwischen den Zeitpunkten der Erfassung der Infrarotstrahlungen, die von den Messwerten M2 und M1 repräsentiert werden. Der Term Tau ist die Zeitkonstante einer Messzelle.

Durch die Bewegung des Objekts in Spaltenrichtung wird derselbe Oberflächenabschnitt des Objekts sequentiell von jeder Messzelle der mehreren Messzellen in der gleichen Spalte erfasst. Jede der Messzellen erfasst denselben Oberflächenabschnitt des Objekts also mehrfach, so dass für diesen Oberflächenabschnitt mehrere Messwertgruppen entstehen. Die Anzahl der Messwertgruppen entspricht der Anzahl der Messzellen der gleichen Spalte. Jede Messwertgruppe umfasst mehrere Messwerte, die jeweils die Infrarotstrahlung repräsentieren, die von dem Oberflächenabschnitt zu der jeweiligen Messzelle gelangt. Aus jeder Messwertgruppe wird mittels der Prozessoreinheit eine Prädiktionstemperatur als Voraussagetemperatur für die tatsächliche Temperatur an demselben Oberflächenabschnitt des Objekts ermittelt. Dadurch entstehen also mehrere Prädiktionstemperaturen für jeweils denselben Oberflächenabschnitt des Objekts. In der Praxis wurde festgestellt, dass jede der Prädiktionstemperaturen einen kleinen Fehler aufweisen kann. So kann jede der Prädiktionstemperaturen fehlerbehaftet sein. Der Fehler der jeweiligen Prädiktionstemperatur ist oftmals sehr klein, beispielsweise kleiner 10 % von der tatsächlichen Temperatur des Oberflächenabschnitts des Objekts.

Die Prozessoreinheit ist konfiguriert, einen Temperaturmittelwert für jeden Oberflächenabschnitt aus den Prädiktionstemperaturen für den jeweiligen Oberflächenabschnitt zu ermitteln. Jeder Temperaturmittelwert bezieht sich dabei vorzugsweise auf den arithmetischen Mittelwert, den gewichteten Mittelwert oder Median der Prädiktionstemperaturen für den jeweiligen Oberflächenabschnitt. Vorzugsweise ist der Temperaturmittelwert nicht auf eine der drei zuvor genannten Methoden zur Ermittlung eines Mittelwerts beschränkt. So kann jeder Temperaturmittelwert mittels einer allgemein bekannten Methode zur Ermittlung eines Mittelwerts ermittelt werden. Methoden zur Ermittlung eines Mittelwerts sind beispielsweise aus den Publikationen "Mathematik für Ingenieure und Naturwissenschaftler Band 2: Ein Lehr- und Arbeitsbuch für das Grundstudium" (ISBN 978-3658077891) und "Mathematik für Ingenieure und Naturwissenschaftler Band 1: Ein Lehr- und Arbeitsbuch für das Grundstudium" (ISBN 978-3658217457) bekannt und können in entsprechender Weise auf die Ermittlung eines Mittelwerts der Prädiktionstemperaturen für den jeweiligen Oberflächenabschnitt angewendet werden. Die Prozessoreinheit kann beispielsweise konfiguriert sein, einen Temperaturmittelwert für jeden Oberflächenabschnitt zu ermitteln, indem die Prozessoreinheit einen Filter mit unendlicher oder endlichen Impulsantwort auf die Prädiktionstemperaturen für den jeweiligen Oberflächenabschnitt anwendet, so dass das daraus resultierende Ergebnis den Temperaturmittelwert ergibt. In einer weiteren, vorteilhaften Ausführungsform kann die Prozessoreinheit kann beispielsweise konfiguriert sein, einen Temperaturmittelwert für jeden Oberflächenabschnitt zu ermitteln, indem die Prozessoreinheit einen Welford-Varianz-Algorithmus auf die Prädiktionstemperaturen für den jeweiligen Oberflächenabschnitt anwendet, so dass das daraus resultierende Ergebnis den Temperaturmittelwert ergibt. Der Welford-Varianz-Algorithmus und dessen Anwendung ist beispielsweise aus der Publikation "The Art of Computer Programming, Volumes 1-4 Gebundene Ausgabe" (3. März 2011, ISBN 978-0321751041) bekannt.

Durch eine Mittelwertbildung der Prädiktionstemperaturen für denselben Oberflächenabschnitt ist es möglich, einen Temperaturmittelwert mittels der Prädiktionseinheit zu ermitteln, die die tatsächliche Temperatur des Oberflächenabschnitts mit einer deutlich geringeren Fehlerrate repräsentiert. Indem die Prozessoreinheit also konfiguriert ist, einen Temperaturmittelwert für jeden Oberflächenabschnitt aus den Prädiktionstemperaturen für den jeweiligen Oberflächenabschnitt zu ermitteln, ist es möglich, die tatsächliche Temperatur (durch den Temperaturmittelwert) am jeweiligen Oberflächenabschnitt besonders präzise zu ermitteln. Darüber hinaus ist der Temperaturmittelwert für den Oberflächenabschnitt des bewegten Objekts auch in der Weise ermittelbar, ohne das Objekt anzuhalten oder das Objekt im Erfassungsbereich des Detektorarrays so lange feststehend zu halten, bis ein Gleichgewichtszustand erreicht ist. Vielmehr ist es möglich, dass das Objekt unterbrechungsfrei an dem Detektorarray vorbeigeführt werden kann, und dass es aufgrund der periodischen Erfassung der Infrarotstrahlung mittels der Messzellen möglich ist, die Prädiktionstemperaturen ohne Unterbrechung der Bewegung des Objekts vorauszusagen. Die Ermittlung der Prädiktionstemperaturen verhindert nicht nur eine Unterbrechung der Bewegung des Objekts, sondern erlaubt auch eine präzise Ermittlung eines Temperaturmittelwerts für jeden Oberflächenabschnitt des Objekts.

Aufgrund der Vielzahl von bolometrische Messzellen des Detektorarrays, die gemäß einer Matrixstruktur in Zeile und Spalte angeordnet sind, ist es möglich, für eine Vielzahl von Oberflächenabschnitten des Objekts Temperaturmittelwerte mittels der Prozessoreinheit zu ermitteln. Die Prozessoreinheit kann hierzu entsprechend konfiguriert sein. So ist es beispielsweise möglich, dass die Prozessoreinheit konfiguriert ist, den Temperaturmittelwert für jeden Oberflächenabschnitt einer matrixförmigen Anordnung von einer Vielzahl von Oberflächenabschnitten des Objekts aus den jeweils zugehörigen Prädiktionstemperaturen für die Oberflächenabschnitte zu ermitteln. Die Oberflächenabschnitte können somit die gesamte, dem Detektorarray zugewandte Oberfläche des Objekts sein oder zumindest ein Teil der Oberfläche des Objekts bilden.

Außerdem ist die Prozessoreinheit dazu konfiguriert, ein Wärmebild des Objekts basierend auf den Temperaturmittelwerten für die Oberflächenabschnitte des Objekts zu ermitteln. Vorzugsweise weist das zu erzeugende Wärmebild Bildabschnitte auf, und zwar vorzugsweise korrespondierend zu der Aufteilung der Oberfläche des Objekts im Oberflächenabschnitt, deren Infrarotstrahlung mittels des Detektorarrays erfasst wird. In einer vorteilhaften Ausgestaltung ist jeder Oberflächenabschnitt genau einem Bildabschnitt des zu erzeugenden Wärmebilds zugeordnet. Vorzugsweise ist die Prozessoreinheit ausgebildet, für jeden Bildabschnitt des Wärmebilds den Farbwert und/oder die Helligkeit eines mindestens einen Pixels des jeweiligen Bildabschnitts basierend auf dem Temperaturmittelwert zu bestimmen, der für den zugeordneten Oberflächenabschnitt ermittelt wurde. Somit kann die Prozessoreinheit konfiguriert sein, die Farbwerte und/oder Helligkeit der Pixel des Wärmebilds durch die Temperaturmittelwerte zu bestimmen. Die Pixel des Wärmebilds können die Temperaturmittelwerte der Oberflächenabschnitte des Objekts repräsentieren.

Die Signalschnittstelle des Systems kann ausgebildet sein, ein Bildsignal bereitzustellen, das das Wärmebild des Objekts repräsentiert. Das Wärmebild kann von der Signalschnittstelle selbst erzeugt sein oder von der Prozessoreinheit erzeugt sein. Das Bildsignal basiert dabei auf dem Wärmebild des Objekts. Mittels des Bildsignals können die Informationen über die Temperatur des Objekts auch an weitere Einheiten übertragen werden.

Bezüglich des Wärmebilds und/oder des Bildsignals gelten die Vorteile in analoger Weise, wie sie im Zusammenhang mit den Temperaturmittelwerten und/oder den Prädiktionstemperaturen erläutert worden sind. So kann das Wärmebild des Objekts besonders schnell und zugleich besonders präzise die Temperaturen des Objekts repräsentieren. Entsprechendes kann für das Bildsignal gelten.

Die Signalschnittstelle kann separat zu der Prozessoreinheit ausgebildet sein. Es ist jedoch auch möglich, dass die Signalschnittstelle einen Teil der Prozessoreinheit bildet. Mit anderen Worten können die Signalschnittstelle und die Prozessoreinheit integral ausgebildet sein. Die Signalschnittstelle kann außerdem dazu ausgebildet sein, das Bildsignal per Funk zu übertragen oder kabelgebunden zu übertragen. So kann die Signalschnittstelle beispielsweise als eine Funkschnittstelle oder als eine kabelgebundene Signalschnittstelle ausgebildet sein.

Eine vorteilhafte Ausgestaltung des Systems zeichnet sich dadurch aus, dass das Detektorarray ausgebildet ist, dass jede Messzelle die Infrarotstrahlung im zugehörigen Erfassungsbereich periodisch mit einer Messdauer erfasst, die kleiner als die Hälfte einer Transferzeit ist, die das bewegte Objekt zum Passieren durch einen Erfassungsbereich benötigt. Dabei kann sich die Transferzeit des bewegten Objekts auf eine Stelle des bewegten Objekts beziehen. Die Transferzeit kann also beispielsweise die Zeit repräsentieren, die eine Stelle des Objekts zum Passieren durch den Erfassungsbereich benötigt. Indem die Messdauer kleiner als die Hälfte der Transferzeit ist, ist es möglich, dass eine Messzelle die Infrarotstrahlung von einem Oberflächenabschnitt des Objekts mindestens zweimal erfasst, während dieser Oberflächenabschnitt den Erfassungsbereich aufgrund der Bewegung des Objekts passiert. Besonders bevorzugt ist die Messdauer kleiner als ein Drittel, ein Viertel oder ein Fünftel der Transferzeit. Ist die Messdauer beispielsweise kleiner als ein Fünftel der Transferzeit, so kann die Infrarotstrahlung eines Oberflächenabschnitts des Objekts mindestens zweimal von der Messzelle erfasst werden, um entsprechende Messwerte zu erzeugen. Diese mehrfache Erfassung der Infrarotstrahlung des Oberflächenabschnitts des Objekts erlaubt die Ermittlung einer Prädiktionstemperatur für diesen Oberflächenabschnitt. Gelangt derselbe Oberflächenabschnitt von einem Erfassungsbereich einer Messzelle in den Erfassungsbereich einer benachbarten Messzelle der gleichen Spalte, so kann von dieser Messzelle die Infrarotstrahlung desselben Oberflächenabschnitts des Objekts ebenfalls mehrfach erfasst werden, so dass hierauf basierend mehrere Messwerte und ein Prädiktionswert ermittelbar sind. Die Transferzeit kann basierend auf einer erfassten und/oder ermittelten Geschwindigkeit des Objekts und einer vorbestimmten Breite des Erfassungsbereichs in Spaltenrichtung bestimmt sein und/oder mittels der Prozessoreinheit ermittelt werden. Die Prozessoreinheit kann hierzu entsprechend konfiguriert sein. Die Geschwindigkeit des Objekts wird auch als Transportgeschwindigkeit des Objekts bezeichnet. Die Prozessoreinheit kann basierend auf der erfassten und/oder ermittelten Geschwindigkeit des Objekts ausgebildet sein, um jedem Oberflächenabschnitt die Messwertgruppen der mehreren Messwertgruppen zuzuordnen, deren Messwerte eine Temperatur des jeweiligen, gleichen Oberflächenabschnitts repräsentieren. Das System kann beispielsweise einen Sensor aufweisen, der zur Erfassung der Geschwindigkeit des Objekts ausgebildet ist. Es ist jedoch auch möglich, dass die Prozessoreinheit konfiguriert ist, basierend auf den erfassten Messwerten der Messzellen der gleichen Spalte die Geschwindigkeit des Objekts zu ermitteln.

Eine weitere vorteilhafte Ausgestaltung des Systems zeichnet sich dadurch aus, dass jede bolometrische Messzelle des Detektorarrays als ein Verzögerungsglied mit einer Zeitkonstante ausgebildet ist, und wobei das Detektorarray ausgebildet ist, dass jede Messzelle die Infrarotstrahlung im zugehörigen Erfassungsbereich periodisch mit der oder einer Messdauer erfasst, die kleiner als die Zeitkonstante der jeweiligen Messzelle ist, so dass jeder Messwert durch Zeitverzögerung fehlerbehaftet ist.

Indem jede Messzelle als ein Verzögerungsglied mit einer Zeitkonstante ausgebildet ist, wird eine sprunghafte Änderung der Intensität der Infrarotstrahlung, wenn diese auf die jeweilige Messzelle wirkt, nicht zu einer sprunghaften Änderung des von der Messzelle erzeugten Messwerts führen. Vielmehr bedarf es in etwa dem Vierfachen bis Fünffachen der Zeitkonstante der jeweiligen Messzelle, bis die tatsächliche Größe des von der jeweiligen Messzelle erzeugten Messwerts den tatsächlichen (neuen) Wert der Intensität der Infrarotstrahlung repräsentiert. Um zu erreichen, dass der Gleichgewichtszustand erreicht wird, müsste das Objekt also mindestens das Vier- bis Fünffache der Zeitkonstante im Erfassungsbereich der Messzellen des Detektorarrays sein. Dies würde in der Praxis jedoch dazu führen, dass das Objekt unter dem Detektorarray angehalten werden muss, was jedoch zu vermeiden ist. Vielmehr soll die Erfassung der Infrarotstrahlung während der Bewegung des Objekts erfolgen können. Deshalb wird die Messdauer jeder der Messzellen besonders klein gewählt, so dass das Objekt ohne Unterbrechung in Spaltrichtung an dem Detektorarray vorbeibewegt werden kann und die währenddessen erfasste Infrarotstrahlung dazu dient, um die Messwerte zu erzeugen sowie die Messwertgruppen, die Prädiktionstemperaturen und die Temperaturmittelwerte zu ermitteln. Es ist deshalb vorgesehen, dass die Messdauer jeder Messzelle kleiner als die (einfache) Zeitkonstante der jeweiligen Messzelle ist. Die von den Messzellen erzeugten Messwerte geben dabei zwar nicht die tatsächliche Temperatur des jeweiligen Oberflächenabschnitts des Objekts an, jedoch erlaubt die mehrfache Erfassung der Infrarotstrahlung desselben Oberflächenobjekts und der daraus erzeugten Messwerte die Ermittlung einer Prädiktionstemperatur für den jeweiligen Oberflächenabschnitts des Objekts, wobei die Prädiktionstemperatur eine Vorhersagetemperatur für die tatsächliche Temperatur am jeweiligen Oberflächenabschnitts des Objekts ist. Trotz der kurzen Messdauer für die Infrarotstrahlung durch die jeweilige Messzelle ist es deshalb möglich, die tatsächliche Temperatur durch die Vorhersagetemperatur vorherzusagen. Die kurze Messdauer erlaubt außerdem die mehrfache Abtastung der von dem Oberflächenabschnitt an die jeweilige Messzelle übertragene Infrarotstrahlung, so dass auch hierzu keine Unterbrechung der Bewegung des Objekts während der Erfassung der Infrarotstrahlung notwendig ist.

Eine weitere vorteilhafte Ausgestaltung des Systems zeichnet sich dadurch aus, dass die Zeitkonstante einer jeden Messzelle durch einen thermischen Widerstand der jeweiligen Messzelle und einer thermischen Kapazität der jeweiligen Messzelle bestimmt ist. So kann sich die Zeitkonstante einer Messzelle beispielsweise aus dem Produkt des thermischen Widerstands der jeweiligen Messzelle und der thermischen Kapazität der jeweiligen Messzelle bilden. Die Zeitkonstante einer jeden Messzelle kann vorbestimmt sein oder mittels der Prozessoreinheit für jede der Messzellen basierend auf den thermischen Widerständen und den thermischen Kapazitäten der Messzellen ermittelt sein.

Eine weitere vorteilhafte Ausgestaltung des Systems zeichnet sich dadurch aus, dass die Messdauer kleiner als die Hälfte der Zeitkonstante der jeweiligen Messzelle ist. Umso kleiner die Messdauer ist, desto größer ist die Anzahl der Erfassungen der Infrarotstrahlung mittels der jeweiligen Messzelle. Dadurch kann eine Messwertgruppe mehr als zwei Messwerte umfassen, was zu einer besonders präzisen Ermittlung der Prädiktionstemperatur basierend auf den Messdaten einer entsprechenden Messwertgruppe mittels der Prozessoreinheit führt. Eine besonders kleine Messdauer erlaubt die Erfassung der Infrarotstrahlung und Erzeugung der Messwerte auch bei einer hohen Geschwindigkeit des Objekts, mit der das Objekt in Spaltenrichtung an dem Detektorarray vorbeibewegt wird. Mit anderen Worten erlaubt die besonders kleine Messdauer auch die Ermittlung eines präzisen Wärmebilds von einem besonders schnell bewegten Objekt.

Eine weitere vorteilhafte Ausgestaltung des Systems zeichnet sich dadurch aus, dass die Prozessoreinheit konfiguriert ist, basierend auf jeder Messwertgruppe die jeweilige Prädiktionstemperatur als eine die Zeitverzögerung kompensierende Vorhersagetemperatur für die tatsächliche Temperatur am jeweils zugeordneten Oberflächenabschnitt des Objekts zu ermitteln. Jede der Messwerte der Messwertgruppe ist durch die Zeitverzögerung der Messeinheit fehlerbehaftet. Durch die bekannte und/oder ermittelbare Zeitkonstante des als Verzögerungsglieds ausgebildeten Messzelle kann die Zeitverzögerung durch die Messwerte der Messwertgruppe kompensiert werden, indem mittels der Messwerte der Messwertgruppe und beispielsweise einem vorbestimmten Kennwert die Vorhersagetemperatur ermittelt wird. So kann beispielsweise aus der Differenz von zwei aufeinander folgend ermittelten Messwerten und der Kenngröße die Vorhersagetemperatur mittels der Prozessoreinheit ermittelt werden. Sind mehr als zwei Messwerte von der Messwertgruppe erfasst, so kann durch einen der Messwerte als Aufsatzpunkt und einer Steigung, die auf den Messwerten basieren, auf die Vorhersagetemperatur für den zugeordneten Oberflächenabschnitt des Objekts geschlossen werden. Die Prozessoreinheit kann ausgebildet sein, um den Messwert als Aufsatzpunkt zu ermitteln und außerdem kann die Prozessoreinheit konfiguriert sein, die Steigung basierend auf den mehreren Messwerten der Messwertgruppe zu ermitteln. Die Prozessoreinheit kann auch ausgebildet sein, dies für jede der Messwertgruppen auszuführen.

Eine weitere vorteilhafte Ausgestaltung des Systems zeichnet sich dadurch aus, dass die Prozessoreinheit konfiguriert ist, die jeweilige Prädiktionstemperatur durch Extrapolation der Messwerte der Messwertgruppe oder Multiplikation eines Differenzwerts der, insbesondere zweier zeitlich aufeinander folgender, Messwerte der jeweiligen Messwertgruppe mit einem vorbestimmten Faktor insbesondere zwischen 0,5 und 0,8, vorzugsweise einem Faktor von 0,632, zu ermitteln. Basierend auf einer Differenz zwischen zwei unmittelbar nacheinander erfassten Messwerten der gleichen Messzelle kann eine abgeschätzte Voraussage getroffen werden, welchen Wert der Messwert der Messzelle bei einer Sprungantwort annimmt. So ist es beispielsweise bekannt, dass die Sprungantwort in der Zeit zwischen Null und der Zeit, die der Zeitkonstante der jeweiligen Messzelle entspricht, einen etwa linearen Verlauf annimmt, so dass der Wert der Messzelle nach der Zeit, die der Zeitkonstante der jeweiligen Messzelle entspricht, einen Wert von 63,2 % der Größe der Messwerte im Gleichgewichtszustand der Messzelle annimmt. Wenn also aus diesem linearen Verlauf bereits eine Aussage über den für den Gleichgewichtszustand zu der erwartenden Größe des Messwerts voraussagbar ist, so kann daraus eine Kenngröße abgeleitet werden, die auch als Faktor bezeichnet werden kann. Dieser Faktor basiert auf der Zeitkonstante der Messzelle. Basierend auf der zuvor genannten Differenz zwischen den beiden Messwerten und dem Faktor kann deshalb auch die Größe des Messwerts im Gleichgewichtszustand nach etwa 4 bis 5 Tau (bzw. dem Vierfachen bis Fünffachen der Zeitkonstante) der Messzelle geschlossen werden.

Eine weitere vorteilhafte Ausgestaltung des Systems zeichnet sich beispielsweise dadurch aus, dass die Prozessoreinheit konfiguriert ist, die jeweilige Prädiktionstemperatur als Vorhersagetemperatur für die tatsächliche Temperatur am jeweils zugeordneten Oberflächenabschnitt des Objekts durch Multiplikation eines Differenzwerts, der durch die Differenz zwischen zwei zeitlich nacheinander erfassten Messwerten einer Messwertgruppe bestimmt ist, mit einem Kennwert zwischen 1,6 und 1,2, insbesondere einem Kennwert von 1,58, zu ermitteln. Der Kennwert von 1,58 entspricht dabei dem Kehrwert von 63,2 %, also dem anteiligen Wert der Sprungantwort nach Ablauf der Zeit, die der einfachen Zeitkonstante entspricht.

Eine weitere vorteilhafte Ausgestaltung des Systems zeichnet sich dadurch aus, dass die Messzellen die Infrarotstrahlung im zugehörigen Erfassungsbereich jeweils mit einer Frequenz von mindestens 20 Hz periodisch erfassen. Vorzugsweise ist die Frequenz größer als 20 Hz. So kann die Frequenz beispielsweise mindestens 30 Hz, mindestens 40 Hz, mindestens 50 Hz oder mindestens 100 Hz sein. Gerade bei höheren Frequenzen ist das System besonders vorteilhaft. Denn der lineare Anstieg einer Sprungantwort eines Verzögerungsglieds, insbesondere eines Verzögerungsglieds erster Ordnung, ist dann vorteilhaft nutzbar, wenn ein sehr kurzes Zeitintervall der Sprungantwort zu berücksichtigen ist, das kleiner als die Zeitkonstante des jeweiligen Verzögerungsglieds ist. Durch die Wahl der hohen Frequenz kann deshalb besonders präzise auf die jeweilige Prädiktionstemperatur geschlossen werden. Außerdem erlaubt die hohe Frequenz, dass die Bewegung des Objekts während des Passierens eines Erfassungsbereichs einer Messzelle nicht angehalten werden muss, um mindestens zwei Messwerte von dem gleichen Oberflächenabschnitt des Objekts erfassen zu können.

Eine weitere vorteilhafte Ausgestaltung des Systems zeichnet sich dadurch aus, dass das System eine Transporteinheit aufweist, die zum Transport des Objekts ausgebildet ist, wobei die Transporteinheit derart angeordnet ist, um das Objekt in der Spaltenrichtung an dem Detektorarray vorbeizubewegen. Die Transporteinheit kann beispielsweise ein umlaufend angetriebenes Förderband sein und/oder dieses aufweisen, wobei die Transporteinheit zwei Umlenkrollen aufweist, die von dem Förderband zumindest teilweise umschlungen sind. Eine der beiden Umlenkrollen kann zum Antrieb des Förderbands ausgebildet sein. Auf einem Transporttrum des Förderbands kann das Objekt in Spaltenrichtung an dem Förderband vorbeibewegt werden.

Eine weitere vorteilhafte Ausgestaltung des Systems zeichnet sich dadurch aus, dass das System eine Steuereinheit zum Steuern der Transporteinheit aufweist. Die Steuereinheit ist ausgebildet, die Transporteinheit derart zu steuern, so dass das Objekt mit einer vorbestimmten Transportgeschwindigkeit an dem Detektorarray vorbeigeführt wird. Außerdem ist die Steuereinheit vorzugsweise über eine weitere Signalverbindung mit der Prozessoreinheit gekoppelt, um ein Geschwindigkeitssignal, das die Geschwindigkeit des Objekts repräsentiert, an die Prozessoreinheit zu übertragen. Mittels der Steuereinheit kann die Transportgeschwindigkeit gesteuert werden, vorzugsweise in der Art, dass mit jeder Messzelle mehrere Messwerte für denselben Oberflächenabschnitt des Objekts erzeugt werden können. Über die weitere Signalverbindung kann die Prozessoreinheit das Geschwindigkeitssignal erhalten, das die tatsächliche Geschwindigkeit des Objekts repräsentiert. Ist diese Geschwindigkeit zu hoch, kann die Prozessoreinheit die Steuereinheit derart steuern, um die Transportgeschwindigkeit zu verringern. Die tatsächliche Geschwindigkeit des Objekts, die von dem Geschwindigkeitssignal repräsentiert ist, kann von der Prozessoreinheit aber auch genutzt werden, um jedem Oberflächenabschnitt die Messwertgruppen der mehreren Messwertgruppen zuzuordnen, deren Messwerte eine Temperatur des jeweiligen, gleichen Oberflächenabschnitts repräsentiert.

Eine weitere vorteilhafte Ausgestaltung des Systems zeichnet sich dadurch aus, dass das System einen Geschwindigkeitssensor aufweist, der angeordnet und ausgebildet ist, um die Geschwindigkeit des an dem Detektorarray vorbeibewegten Objekts zu erfassen, wobei der Geschwindigkeitssensor zur Erzeugung eines Sensorsignals ausgebildet ist, das die erfasste Geschwindigkeit des Objekts repräsentiert, und wobei der Geschwindigkeitssensor mit der Prozessoreinheit über eine weitere Signalverbindung gekoppelt ist, um das Sensorsignal an die Prozessoreinheit zu übertragen. Der Geschwindigkeitssensor kann zur berührungslosen Erfassung der Geschwindigkeit des Objekts ausgebildet sein. So kann der Geschwindigkeitssensor beispielsweise als ein Sensor zur optischen Erfassung der Geschwindigkeit des Objekts ausgebildet sein. Der Geschwindigkeitssensor kann jedoch auch zur indirekten Erfassung der Geschwindigkeit des Objekts ausgebildet sein. So kann der Geschwindigkeitssensor beispielsweise zur Erfassung der Geschwindigkeit eines Förderbands einer Transporteinheit ausgebildet sein, die das Objekt an dem Detektorarray vorbeibewegt. Die Geschwindigkeit des Transportbands entspricht dabei der Geschwindigkeit des Objekts. Somit kann der Geschwindigkeitssensor zur direkten oder indirekten Erfassung der Geschwindigkeit des Objekts ausgebildet sein. Über die weitere Signalverbindung zwischen dem Geschwindigkeitssensor und der Prozessoreinheit kann das Sensorsignal an die Prozessoreinheit übertragen werden, wobei das Sensorsignal die von dem Geschwindigkeitssensor (direkt oder indirekt) erfasste Geschwindigkeit des Objekts repräsentiert. In Bezug auf die Geschwindigkeit des Objekts wird auf die vorangegangenen, vorteilhaften Erläuterungen in analoger Weise Bezug genommen. So kann anhand der Geschwindigkeit des Objekts beispielsweise von der Prozessoreinheit jedem Oberflächenabschnitt die Messwertgruppen der mehreren Messwertgruppen zugeordnet werden, deren Messwerte eine Temperatur des jeweiligen, gleichen Oberflächenabschnitts repräsentieren. Es ist aber auch möglich, dass die Geschwindigkeit des Objekts angepasst wird, um die gewünschte Frequenz von Erfassungen mittels der Messzellen zu erreichen.

Eine weitere vorteilhafte Ausgestaltung des Systems zeichnet sich dadurch aus, dass die Prozessoreinheit konfiguriert ist, die Messwerte der Messzellen basierend auf der Geschwindigkeit des Objekts und der Messwertdauer der Messzellen in die Messwertgruppen aufzuteilen. Die Messwertdauer ist vorzugsweise kleiner als die Hälfte der Zeitkonstante der jeweiligen Messzelle. Außerdem ist es bevorzugt vorgesehen, dass jede Messzelle zur periodischen Erfassung der Infrarotstrahlung im zugehörigen Erfassungsbereich ausgebildet ist. Jeder Messwert einer Messzelle kann somit einer der Messwertgruppen zugeordnet werden. Es ist jedoch auch möglich, dass nur Teile der Messwerte der Messzellen Messwertgruppen zugeordnet werden. Es ist jedoch vorgesehen, dass jede Messwertgruppe mindestens zwei Messwerte umfasst.

Gemäß einem zweiten Aspekt der Erfindung wird die eingangs genannte Aufgabe gelöst durch ein Verfahren mit den Merkmalen des Anspruchs 13. Vorgesehen ist also ein Verfahren zur Ermittlung eines Wärmebilds eines bewegten Objekts mittels eines Systems, das eine Prozessoreinheit, eine Signalschnittstelle und ein Detektorarray aufweist, das eine Vielzahl von bolometrischen Messzellen umfasst, die gemäß einer Matrixstruktur in Zeilen und Spalten angeordnet sind, so dass in jeder Zeile mehrere Messzellen hintereinander angeordnet sind und in jeder Spalte in einer Spaltenrichtung mehrere Messzellen hintereinander angeordnet sind. Jede Messzelle ist basierend auf einer von der jeweiligen Messzelle erfassbaren Infrarotstrahlung zur Erzeugung eines Messwerts ausgebildet, der eine Temperatur im zugehörigen Erfassungsbereich der jeweiligen Messzelle repräsentiert Das Verfahren weist zumindest die folgenden Schritte a) bis g) auf:

a) Periodisches Erfassen von Infrarotstrahlung mittels jeder Messzelle im zugehörigen Erfassungsbereich, während ein Objekt in einer Spaltenrichtung der Spalten an dem Detektorarray vorbeibewegt wird und jede Spalte (18) dadurch in Spaltenrichtung S über einen jeweils zugeordneten Oberflächenstreifen des Objekts (4) hinwegbewegt wird, so dass je gemeinsamer Spalte (18) jede der Messzellen (12) der jeweiligen gemeinsamen Spalte (18) jeweils

(a) zum einen die Infrarotstrahlung des gleichen von jedem Oberflächenabschnitt (22) einer Mehrzahl von Oberflächenabschnitten (22) des der jeweiligen Spalte (18) zugeordneten Oberflächenstreifens des Objekts (4) mehrfach erfassten und dadurch

(b) zum anderen mehrere Messwerte M für jeden Oberflächenabschnitt des der jeweiligen gemeinsamen Spalte (18) zugeordneten Oberflächenstreifens des Objekts (4) erzeugen;

b) Bilden jeweils einer Messwertgruppe für den jeweiligen Oberflächenabschnitt (22) aus jeweils einer Mehrzahl der von der gleichen Messzelle erzeugten Messwerte, die sich auf den gleichen Oberflächenabschnitt beziehen;

c) Übertragen der Messwerte von dem Detektorarray über eine Signalverbindung an die Prozessoreinheit;

d) Ermitteln jeweils einer Prädiktionstemperatur als Vorhersagetemperatur für die tatsächliche Temperatur am jeweils zugeordneten Oberflächenabschnitt des Objekts mittels der Prozessoreinheit basierend auf jeder Messwertgruppe, so dass für jeden Oberflächenabschnitt des Objekts mehrere Prädiktionstemperaturen ermittelt werden;

e) Ermitteln eines Temperaturmittelwerts für jeden Oberflächenabschnitt mittels der Prozessoreinheit aus den Prädiktionstemperaturen für den jeweiligen Oberflächenabschnitt;

f) Ermitteln eines Wärmebilds des Objekts mittels der Prozessoreinheit basierend auf den Temperaturmittelwerten für die Oberflächenabschnitte des Objekts; und

g) Bereitstellen eines Bildsignals mittels der Signalschnittstelle, wobei das Bildsignal das Temperaturbild des Objekts repräsentiert.

Die Verfahrensschritte a) bis g) werden vorzugsweise in der angegebenen Reihenfolge ausgeführt. Der Verfahrensschritt a) umfasst die Teilschritte (a) und (b), die vorzugsweise in der angegebenen Reihenfolge ausgeführt werden. Für das Verfahren gemäß dem zweiten Aspekt der Erfindung wird auf die vorteilhaften Erläuterungen, bevorzugten Merkmale, Effekte und/oder Vorteile, wie sie im Zusammenhang mit dem System gemäß dem ersten Aspekt der Erfindung und/oder einer der zugehörigen, vorteilhaften Ausgestaltungen erläutert worden sind zumindest in analoger Weise Bezug genommen. Das Verfahren bietet somit beispielsweise den Vorteil, dass ein Wärmebild eines bewegten Objekts besonders präzise ermittelt werden kann, ohne dass es einer Unterbrechung der Bewegung des Objekts bedarf. Vielmehr kann das Objekt ohne Unterbrechung an dem Detektorarray vorbeigeführt werden, während die Messzellen Infrarotstrahlung erfassen und Messwerte erzeugen. Basierend hierauf können Prädiktionstemperaturen für eine Mehrzahl von Oberflächenabschnitten des Objekts ermittelt werden. Diese dienen wiederum zur Ermittlung von Temperaturmittelwerten für die Oberflächenabschnitte. Diese Mittelwerttemperaturen können dazu dienen, um das Wärmebild des Objekts zu ermitteln, das über ein Bildsignal für weitere Empfänger zur Verfügung gestellt werden kann.

Zu den im Folgenden wiedergegebenen, vorteilhaften Ausgestaltungen des Verfahrens wird auf die vorteilhaften Erläuterungen, bevorzugten Merkmale, Effekte und/oder Vorteile in analoger Weise Bezug genommen, wie sie für die vorteilhaften Ausgestaltungen des Systems gemäß dem ersten Aspekt der Erfindung erläutert worden sind. Auf eine Wiederholung wird verzichtet.

Eine vorteilhafte Ausgestaltung des Verfahrens zeichnet sich dadurch aus, dass jede Messzelle in Schritt a) die Infrarotstrahlung im zugehörigen Erfassungsbereich periodisch mit einer Messdauer erfasst, die kleiner als die Hälfte einer Transferzeit ist, die das bewegte Objekt zum Passieren durch einen Erfassungsbereich benötigt.

Eine weitere vorteilhafte Ausgestaltung des Verfahrens zeichnet sich dadurch aus, dass jede bolometrische Messzelle des Detektorarrays als ein Verzögerungsglied mit einer Zeitkonstante ausgebildet ist, und wobei jede Messzelle in Schritt a) die Infrarotstrahlung im zugehörigen Erfassungsbereich periodisch mit der oder einer Messdauer erfasst, die kleiner als die Zeitkonstante der jeweiligen Messzelle ist, so dass jeder Messwert durch Zeitverzögerung fehlerbehaftet ist.

Eine weitere vorteilhafte Ausgestaltung des Verfahrens zeichnet sich dadurch aus, dass die Zeitkonstante einer jeden Messzelle durch einen thermischen Widerstand der jeweiligen Messzelle und einer thermischen Kapazität der jeweiligen Messzelle bestimmt ist.

Eine weitere vorteilhafte Ausgestaltung des Verfahrens zeichnet sich dadurch aus, dass die Messdauer kleiner als die Hälfte der Zeitkonstante der jeweiligen Messzelle ist.

Eine weitere vorteilhafte Ausgestaltung des Verfahrens zeichnet sich dadurch aus, dass die Prädiktionstemperatur in Schritt d) jeweils als eine die Zeitverzögerung kompensierende Vorhersagetemperatur für die tatsächliche Temperatur am jeweils zugeordneten Oberflächenabschnitt des Objekts ermittelt wird.

Eine weitere vorteilhafte Ausgestaltung des Verfahrens zeichnet sich dadurch aus, dass die Infrarotstrahlung in Schritt a) mit einer Frequenz von mindestens 20 Hz periodisch erfasst wird.

Eine weitere vorteilhafte Ausgestaltung des Verfahrens zeichnet sich dadurch aus, dass das System eine Transporteinheit aufweist, die zum Transport des Objekts ausgebildet ist, wobei Schritt a) des Verfahrens den folgenden Teilschritt aufweist: Transportieren des Objekts, so dass das Objekt in der Spaltenrichtung an dem Detektorarray vorbeibewegt wird.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

Fig. 1        zeigt eine vorteilhafte Ausgestaltung des Systems in einer schematischen Ansicht.
Fig. 2        zeigt eine weitere, vorteilhafte Ausgestaltung des Systems in einer schematischen Ansicht.
Fig. 3 bis 5    zeigen eine weitere, vorteilhafte Ausgestaltung des Systems zu unterschiedlichen Zeitpunkten.

Fig. 6    zeigt einen vorteilhaften Verlauf der Messwerte einer Messzelle in Reaktion auf einen sprunghaften Anstieg einer erfassten Infrarotstrahlung in einer schematischen Darstellung.

Fig.7 zeigt eine vorteilhafte Ausgestaltung eines Ablaufplans des Verfahrens.

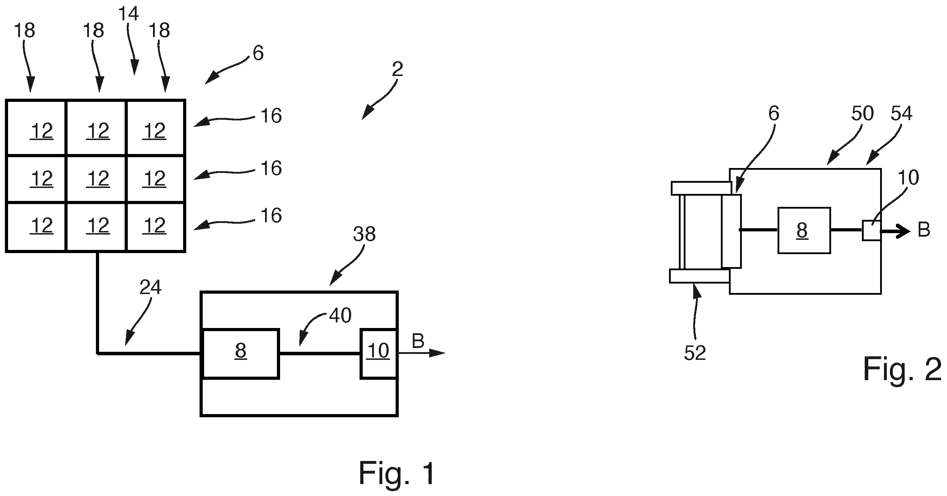

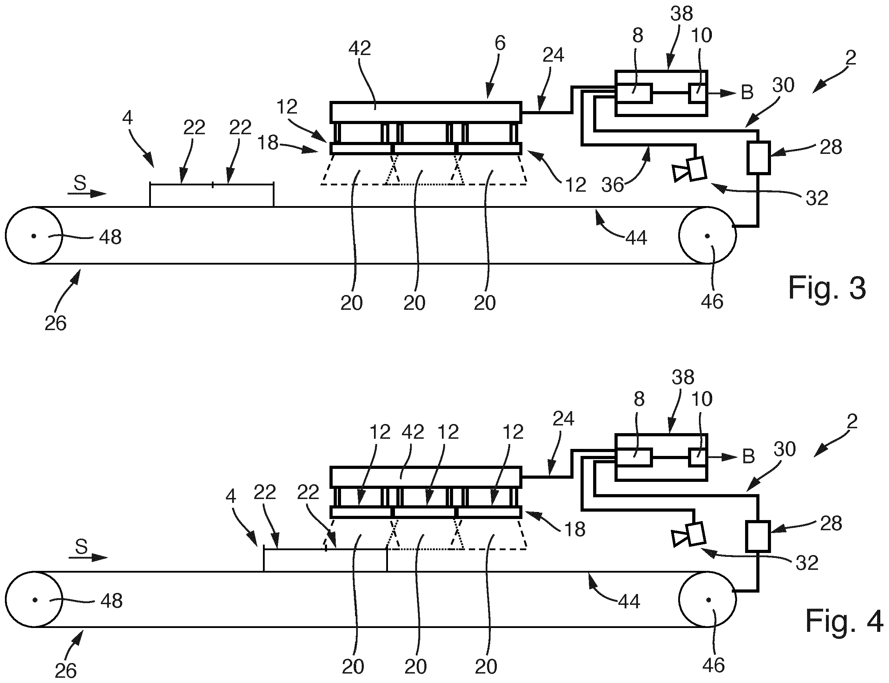

In der Figur 1 ist eine vorteilhafte Ausgestaltung des Systems 2 schematisch dargestellt. Das System 2 ist zur Ermittlung eines Wärmebilds eines bewegten Objekts 4 ausgebildet. Ein bewegtes Objekt 4 ist im Zusammenhang mit einer weiteren, vorteilhaften Ausgestaltung des Systems 2 in den Figuren 3 bis 5 jeweils schematisch dargestellt.

Das System 2, wie es beispielhaft in der Figur 1 dargestellt ist, weist einen Detektorarray 6, eine Prozessoreinheit 8 und eine Signalschnittstelle 10 auf.

Eine weitere vorteilhafte Ausgestaltung des Systems 2 ist eine Kamera 50, wie sie beispielsweise schematisch in der Fig. 2 dargestellt ist. Dabei ist die Prozessoreinheit 8 in einem Gehäuse 54 der Kamera 50 angeordnet. An einer Rückseite der Kamera 50 kann die Signalschnittstelle 10 angeordnet sein. An einer Vorderseite der Kamera 50 oder innenseitig zu einer Öffnung an der Vorderseite der Kamera 50 kann das Detektorarray 6 angeordnet sein. Außerdem weist die Kamera ein Objektiv 52 auf, das zum Bündeln von Infrarotstrahlung auf das Detektorarray 6 ausgebildet ist.

Wenn im Folgenden auf das System 2 Bezug genommen wird, können sich die Erläuterungen auf das System 2 als solches, insbesondere wie es beispielsweise und schematisch in Figur 1 oder 3 bis 5 dargestellt ist, oder auf eine Kamera 50 beziehen. Die Kamera 5 kann also eine Ausgestaltung des Systems 2 sein oder das System 2 umfassen.

Die Prozessoreinheit 8 und die Signalschnittstelle 10 des Systems 2 können von einer gemeinsamen Einheit 38 des Systems 2 umfasst sein. Innerhalb dieser gemeinsamen Einheit 38 kann eine Signalverbindung 40 zwischen der Prozessoreinheit 8 und der Signalschnittstelle 10 bestehen. Grundsätzlich ist es jedoch auch möglich, dass die Prozessoreinheit 8 und die Signalschnittstelle 10 integral ausgebildet sind. So kann die Signalschnittstelle 10 eine Signalschnittstelle der Prozessoreinheit 8 sein.

Die Prozessoreinheit 8 kann eine Datenverarbeitungseinheit, insbesondere einen Signalprozessor aufweisen, der zur Verarbeitung von Daten und/oder Signalen ausgebildet ist. Die Signalschnittstelle 10 kann zum Übertragen von einem Signal ausgebildet sein. So kann die Signalschnittstelle 10 beispielsweise als eine Funk-Signalschnittstelle zum Übertragen des Bildsignals B per Funk ausgebildet sein. Die Signalschnittstelle 10 kann das Bildsignal B jedoch auch über eine leitungsgebundene Verbindung übertragen, sofern die Signalschnittstelle 10 als eine leitungsgebundene Signalschnittstelle ausgebildet ist.

In der Figur 1 ist eine vorteilhafte Ausgestaltung des Detektorarrays 6 des Systems 2 schematisch dargestellt. Das Detektorarray 6 weist eine Vielzahl von bolometrischen Messzellen 12 auf. Die Messzellen 12 sind gemäß einer vorbestimmten Matrixstruktur 14 in Zeilen 16 und Spalten 18 angeordnet, so dass in jeder Zeile 16 mehrere Messzellen 12 hintereinander angeordnet sind und in jeder Spalte 18 mehrere Messzellen 12 hintereinander angeordnet sind.

Das Detektorarray 6 ist in der vorteilhaften Ausgestaltung des Systems 2 in den Figuren 3 bis 5 jeweils in einer schematischen Querschnittsansicht dargestellt. Das Detektorarray 6 weist vorzugsweise einen Grundkörper 42 auf, der thermisch und/oder elektrisch mit jedem der Messzellen 12 gekoppelt ist. Der Grundkörper 42 weist eine vorbestimmte, thermische Wärmekapazität auf. Die thermische Wärmekapazität des Grundkörpers 42 wird auch als Wärmekapazität des Grundkörpers 42 bezeichnet.

Jeder Messzelle 12 ist ein Erfassungsbereich 20 zugeordnet. Der Erfassungsbereich 20 einer Messzelle 12 kann vorzugsweise als der kegelstumpfförmige Bereich verstanden werden, der unmittelbar an die Messzelle 12 anschließt. Der Erfassungsbereich 20 einer Messzelle 12 kann vorbestimmt sein. Außerdem ist es möglich, dass sich Erfassungsbereiche 20 von benachbarten Messzellen 12 teilweise überlappen. Dies ist beispielhaft in den Figuren 3 bis 5 dargestellt.

Jede Messzelle 12 ist zur Erfassung von Infrarotstrahlung im zugehörigen Erfassungsbereich 20 ausgebildet. Durch die erfasste Infrarotstrahlung erwärmt sich die Messzelle 12. Jede Messzelle 12 kann über eine zugehörige, elektrisch leitfähige und/oder thermisch leitfähige Verbindung mit dem Grundkörper 42 verbunden sein. Jede dieser Verbindungen zwischen einer Messzelle 12 und dem Grundkörper 42 kann eine vorbestimmte Wärmeleitfähigkeit aufweisen. Über diese Verbindungen kann deshalb Wärme von der jeweiligen Messzelle 12 zu dem Grundkörper 42, und in umgekehrter Richtung, übertragen werden. Bevorzugt ist es vorgesehen, dass eine Isolationsschicht zwischen dem Grundkörper 42 und den Messzellen 12 angeordnet ist, die zur thermischen Isolierung der Messezelle 12 gegenüber dem Grundkörper 42 ausgebildet ist und/oder dazu dient. Diese Isolationsschicht kann von Luft, insbesondere einem annähernd unter Vakuum stehenden Raum, gebildet sein. Bevorzugt sind die Messzellen 12 in einer gemeinsamen Ebene angeordnet. Dadurch können die Messzellen 12 in Zeilen 16 und Spalten 18 gemäß der Matrixstruktur 14 verteilt angeordnet sein.

Durch die zuvor erwähnte Isolationsschicht sowie durch die Ausgestaltung der elektrisch und/oder thermisch leitfähigen Verbindungen zwischen den Messzellen 12 und dem Grundkörper 42 kann gewährleistet werden, dass Infrarotstrahlung, die auf die Messzellen 12 trifft, zumindest im Wesentlichen nicht an den Grundkörper 42 weitergeleitet wird. In der Praxis kann dies jedoch nicht ganz ausgeschlossen werden. So kann beispielsweise ein kleiner Teil der über die Infrarotstrahlung auf eine Messzelle 12 übertragenen Wärmeenergie an den Grundkörper 42 gelangen, der die zuvor genannte Wärmekapazität aufweist. Von dem Grundkörper 42 kann also Wärmeenergie gespeichert sein. Wie schnell die Wärmeenergie von der Messzelle 12 an den Grundkörper 42 gelangt, kann über die Wärmeleitfähigkeit der jeweiligen Verbindung von einer Messzelle 12 zum Grundkörper 42 bestimmt sein. Die Wärmekapazität des Grundkörpers 42 kann anteilig auf die Messzellen 12 verteilt und/oder jeder der Messzelle 12 ein entsprechender Anteil der Wärmekapazität des Grundkörpers 42 zugeordnet sein. Der Kehrwert der Wärmeleitfähigkeit einer jeweiligen Verbindung von der Messzelle 12 zum Grundkörper 42 kann als ein thermischer Widerstand der jeweiligen Messzelle 12 bezeichnet sein und/oder als entsprechender thermischer Widerstand der Messzelle 12 zugeordnet sein. Jede Messzelle 12 kann deshalb durch einen thermischen Widerstand sowie durch eine thermische Wärmekapazität, die kurz auch als thermische Kapazität bezeichnet sein kann, charakterisiert sein. Es ist deshalb möglich, dass jede Messzelle 12 des Detektorarrays 6 als ein Verzögerungsglied mit einer Zeitkonstante Tau ausgebildet ist. Wird die Intensität einer Infrarotstrahlung, die auf eine Messzelle 12 einwirkt, sprunghaft erhöht, so wird von der jeweiligen Messzelle 12 ein Messwert M erzeugt, der mit der Zeit exponentiell ansteigt bis der Messwert M einen statischen Zustand $M_{stat}$ erreicht, der die tatsächlich erfasste Infrarotstrahlung in der Messzelle 12 repräsentiert. Dies ist insbesondere dann der Fall, wenn jede der Messzelle 12 als ein Zeitverzögerungsglied erster Ordnung zur Erfassung von Infrarotstrahlung und zur Erzeugung eines Messwerts M, der die erfasste Infrarotstrahlung repräsentiert, ausgebildet ist.

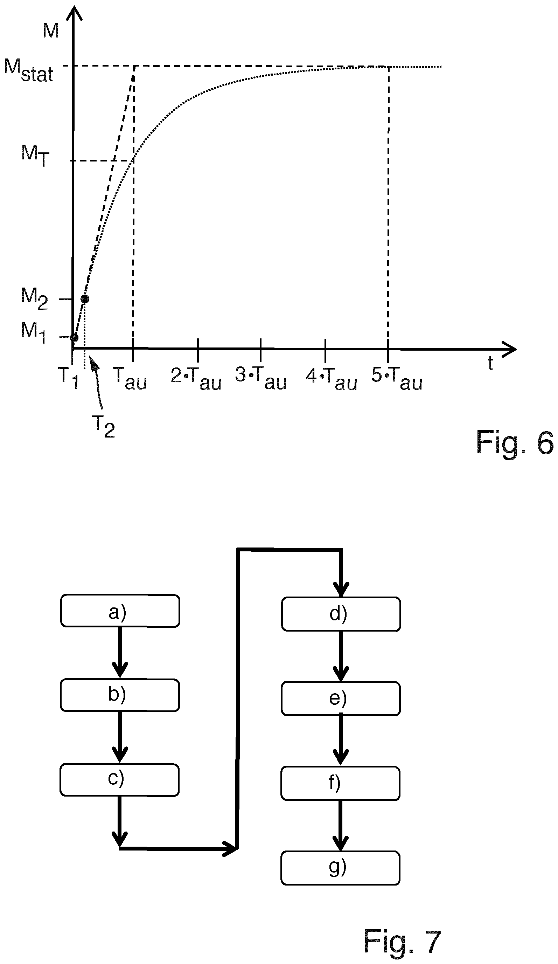

Rein beispielhaft wird auf den über die Zeit t aufgetragenen Verlauf des Messsignals M einer Messzelle 12 aus der Figur 6 Bezug genommen. Der exponentielle, gepunktete Verlauf des Messwerts M ergibt sich, wenn die Infrarotstrahlung, die auf die Messzelle 12 einwirkt, sprunghaft ansteigt. Nach etwa dem Vierfachen bis Fünffachen der Zeitkonstante Tau nimmt der Messwert M die Größe $M_{stat}$ an, die die tatsächliche Temperatur im Erfassungsbereich 20 der Messzelle 12 repräsentiert. Der Messwert M weist jedoch bereits nach einer Zeit von der einfachen Zeitkonstante Tau eine Größe $M_T$ auf, die etwa 63,2% der statischen Messgröße $M_{stat}$ im Gleichgewichtszustand ist. Durch den exponentiellen Verlauf des Messwerts M ist außerdem festzustellen, dass zwei nacheinander erfasste Messwerte M1, M2, die in einem Zeitraum zumindest im Wesentlichen unmittelbar nach dem sprunghaften Anstieg der Infrarotstrahlung erfasst worden sind, auf einer Gerade liegen, über die auf den Messwert $M_{stat}$ im Gleichgewichtszustand bzw. den statischen Messwert $M_{stat}$ geschlossen werden kann. Werden also die beiden Messwerte M1 und M2 mittels der Messzelle 12 erfasst und wird über die Differenz und eine vorbestimmte Steigung der zuvor genannten Geraden auf den Messwert $M_{stat}$ im Gleichgewichtszustand geschlossen, ist es nicht notwendig, tatsächlich abzuwarten, bis der Gleichgewichtszustand bei einer Zeit von T = 5 Tau erreicht ist, sondern es kann viel schneller eine Abschätzung des Messwerts $M_{stat}$ für den Gleichgewichtszustand vorgenommen werden.

Grundsätzlich ist jede Messzelle 12 basierend auf der von der jeweiligen Messzelle 12 erfassten Infrarotstrahlung zur Erzeugung eines Messwerts M ausgebildet, der eine Temperatur im zugehörigen Erfassungsbereich 20 der jeweiligen Messzelle 12 repräsentiert. Außerdem ist das Detektorarray 6 ausgebildet, während das Objekt 4 in einer Spaltenrichtung S der Spalten 18 des Detektorarrays 6 an dem Detektorarray 6 vorbeibewegt wird, das jede Messzelle 12 einer gemeinsamen Spalte 18 die Infrarotstrahlung im zugehörigen Erfassungsbereich 20 derart periodisch erfasst und zugehörige Messwerte M erzeugt, so dass jede Messzelle 12 der jeweiligen, gemeinsamen Spalte 18 die Infrarotstrahlung des gleichen Oberflächenabschnitts 22 einer Mehrzahl von Oberflächenabschnitten 22 des Objekts 4 mehrfach erfasst.

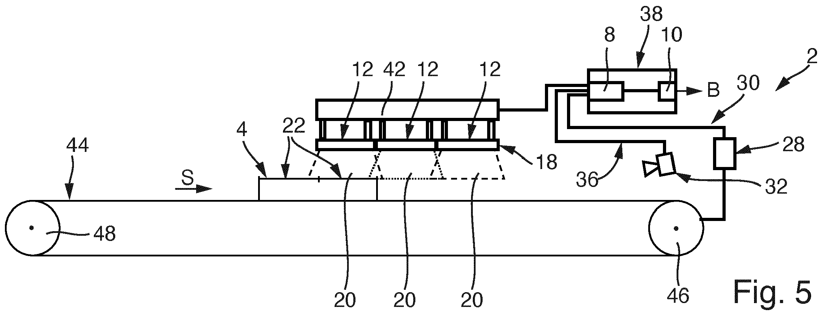

Die mehrfache Erfassung eines Oberflächenabschnitts 22 mit einer der Messzellen 12 ist schematisch aus den Figuren 4 und 5 zu entnehmen. Auch wenn im Folgenden auf die mehrfache Erfassung eines der Oberflächenabschnitte 22 mittels einer der Messzellen 12 des Detektorarrays 6 eingegangen wird, so sollen die entsprechenden Erläuterungen in analoger Weise für jedes der Oberflächenabschnitte 22 und jedes der Messzelle 12 der entsprechenden Spalte 18 in analoger Weise gelten.

Wie aus der Figur 4 zu entnehmen ist, wird das Objekt 4 mittels der Transporteinheit 26 in Spaltenrichtung S an dem Detektorarray 6 berührungslos und ununterbrochen vorbeigeführt. In der vorteilhaften Ausgestaltung des Systems 2 aus den Figuren 3 bis 5 ist das Detektorarray 6 dabei über der Transporteinheit 26 derart angeordnet, so dass die Erfassungsbereiche 20 die Oberflächenabschnitte 22 des Objekts 4 erfassen können, während das Objekt 4 in Spaltenrichtung S mittels der Transporteinheit 26 unter dem Detektorarray 6 vorbeigeführt wird.

In der Figur 4 ist dabei eine erste Stellung (theoretische Momentaufnahme) des Objekts 4 dargestellt, bei der eines der Oberflächenabschnitte 22 in den Erfassungsbereich 20 der links angeordneten Messzelle 12 gelangt. Zu dem entsprechenden Zeitpunkt T1 kann deshalb die Infrarotstrahlung, die von dem Oberflächenabschnitt 22 auf die zuvor genannte Messzelle 12 einwirkt von dieser Messzelle 12 erfasst werden, sodass diese Messzelle 12 einen Messwert M1 erzeugt. Die Infrarotstrahlung des Oberflächenabschnitts 22 des Objekts 4 wird von der Messzelle 12 periodisch erfasst. Gleichzeitig wird das Objekt 4 in Spaltenrichtung S bewegt. In der Figur 5 ist eine weitere Stellung (weitere theoretische Momentaufnahme) des Objekts 4 dargestellt, bei der die zweite Erfassung zum Zeitpunkt T2 mittels der gleichen Messzelle 12 von der Infrarotstrahlung des gleichen Oberflächenabschnitts 22 des Objekts 4 erfolgt. Die Messzelle 12 erzeugt dabei einen zweiten Messwert M2. Daraus resultiert, dass von der gleichen Messzelle 12 zwei Messwerte M1, M2 erzeugt werden, die jeweils die Temperatur des gleichen Oberflächenabschnitts 22 des Objekts 4 repräsentieren. Die beiden Messwerte M1, M2 wurden zu den Zeitpunkten T1, T2 erfasst. Es gibt also eine Mehrzahl von der gleichen Messzelle 12 erzeugten Messwerten M1, M2, die sich auf den gleichen Oberflächenabschnitt 22 beziehen. Diese Mehrzahl der von der gleichen Messzelle 12 erzeugten Messwerte M1, M2 bildet eine sogenannte Messwertgruppe für den jeweiligen Oberflächenabschnitt 22.

Wie zuvor erläutert worden ist, weist das Detektorarray 6 eine Vielzahl von Messzellen 12 auf, wobei auch mehrere Messzellen 12 je Spalte 18 vorgesehen sind. Die dem Detektorarray 6 zugewandte Oberfläche des Objekts 4 ist in eine Mehrzahl von Oberflächenabschnitte 22 gegliedert. Diese Gliederung kann eine virtuelle Gliederung sein, und muss keine mechanischen Unterbrechungen und/oder ähnliche Markierungen aufweisen. Insbesondere kann die Oberfläche des Objekts 4 auch matrixförmig in einer Mehrzahl von Oberflächenabschnitten 22 gegliedert sein. Wird das Objekt 4, wie es schematisch in den Figuren 3 bis 5 zu entnehmen ist, in Spaltenrichtung S an dem Detektorarray 6 vorbeibewegt, so werden von den Messzellen 12 der gleichen Spalte 18 jeweils eine Messwertgruppe erzeugt, wobei jede Messwertgruppe eine Mehrzahl von Messwerten M umfasst, die sich auf den jeweils gleichen Oberflächenabschnitt 22 des Objekts 4 beziehen. Für jeden Oberflächenabschnitt 22 werden also mehrere Messwertgruppen erzeugt. Außerdem ist das Detektorarray 6 über eine Signalverbindung 24 mit der Prozessoreinheit 8 des Systems 2 gekoppelt, um die von den Messzellen 12 erzeugten Messwerte M an die Prozessoreinheit 8 zu übertragen. Die Messwerte M können dabei in den Messwertgruppen über die Signalverbindung 24 von dem Detektorarray 6 an die Prozessoreinheit 8 übertragen werden.

Die Prozessoreinheit 8 ist dazu konfiguriert, jedem Oberflächenabschnitt 22 des Objekts 4 die Messwertgruppen der mehreren Messwertgruppen zuzuordnen, deren Messwerte M eine Temperatur des jeweiligen, gleichen Oberflächenabschnitts 22 repräsentieren. Außerdem ist die Prozessoreinheit 8 konfiguriert, basierend auf jeder Messwertgruppe jeweils eine Prädiktionstemperatur als eine Vorhersagetemperatur für die tatsächliche Temperatur am jeweils zugeordneten Oberflächenabschnitt 22 des Objekts 4 zu ermitteln, so dass für jeden Oberflächenabschnitt 22 des Objekts 4 mehrere Prädiktionstemperaturen ermittelt werden.

Jede Messwertgruppe, die zur Ermittlung einer Prädiktionstemperatur dient, umfasst mehrere Messwerte M, wie beispielsweise die Messwerte M1, M2. Wie zuvor erläutert wurde, und wie es beispielhaft aus der Figur 6 zu entnehmen ist, kann basierend auf den mehreren Messwerten M bzw. M1, M2 der gleichen Messwertgruppe auf eine Temperatur geschlossen werden, die auch als Prädiktionstemperatur bezeichnet wird, die in einem Gleichgewichtszustand vorliegen würde, wenn die Messzelle 12 im Gleichgewichtszustand wäre. Dies ist in der Praxis jedoch kaum möglich, denn dazu müsste das Objekt 4 unter dem Detektorarray 6 angehalten werden und abgewartet werden, bis sich der Gleichgewichtszustand einstellt. Dies ist jedoch nicht vorgesehen. Vielmehr ist es wünschenswert, dass die Temperaturen der Oberflächenabschnitte 22 von einem ununterbrochen bewegten Objekt 4 ermittelt werden, um basierend auf den so ermittelten Temperaturen auf ein Wärmebild des Objekts 4 schließen zu können. Die mittels der Messwerte M1, M2 der gleichen Messwertgruppe ermittelte Temperatur wird als Prädiktionstemperatur für den jeweiligen Oberflächenabschnitt 22 bezeichnet, da diese Prädiktionstemperatur eine die Zeitverzögerung kompensierende Vorhersage für die tatsächliche Temperatur des jeweiligen Oberflächenabschnitts 22 ist.

Wird das Objekt 4 in Spaltenrichtung S an dem Detektorarray 6 vorbeigeführt, so werden von jeder Messzelle 12 einer gemeinsamen Spalte 18 mehrere Messwerte M für eine Messwertgruppe erzeugt, die von der Prozessoreinheit 8 verwendet wird, um für den gleichen Oberflächenabschnitt 22 basierend auf den zuvor genannten Messwertgruppen jeweils eine Prädiktionstemperatur zu ermitteln. Für den gleichen Oberflächenabschnitt 22 ermittelt die Prozessoreinheit 8 also mehrere Prädiktionstemperaturen. Jede der Prädiktionstemperaturen kann einen, wenn auch nur kleinen Fehler aufweisen. Um auf die tatsächliche Temperatur des jeweiligen Oberflächenabschnitts 22 mit einem möglichst geringen Fehler schließen zu können, werden die Prädiktionstemperaturen, die sich auf dem jeweils gleichen Oberflächenabschnitt 22 des Objekts 4 beziehen, gemittelt. Mit jeder Mittlung kann sich der Fehleranteil um dem Faktor 1,41 reduzieren. Werden also beispielsweise drei Prädiktionstemperaturen, die sich jeweils auf den gleichen Oberflächenabschnitt 22 beziehen, gemittelt, so kann der sich daraus ergebende Temperaturmittelwert einen Fehler aufweisen, der um 50 % kleiner ist, als der Fehler jeder der zuvor genannten Prädiktionstemperaturen gegenüber der tatsächlichen Temperatur des jeweiligen Oberflächenabschnitts 22 des Objekts 4.

Für jeden Oberflächenabschnitt 22 des Objekts 4 ermittelt die Prozessoreinheit 8 einen Temperaturmittelwert. Außerdem ist die Prozessoreinheit 8 dazu konfiguriert, ein Wärmebild des Objekts 4 basierend auf den Temperaturmittelwerten für die Oberflächenabschnitte 22 des Objekts 4 zu ermitteln. Das Wärmebild kann eine Mehrzahl von Pixel aufweisen, die zu dem Muster der Oberflächenabschnitte 22 des Objekts 4 korrespondieren. Für jeden Oberflächenabschnitt 22 wird mittels der Prozessoreinheit 8 ein Temperaturmittelwert ermittelt. Das zu einem Oberflächenabschnitt 22 korrespondierende Pixel des Wärmebilds kann somit basierend auf dem Temperaturmittelwert ermittelt werden, der zu dem gleichen Oberflächenabschnitt 22 zugeordnet ist. Dies kann entsprechend für alle Pixel in analoger Weise ausgeführt. Basierend auf der Mehrzahl der Temperaturmittelwerte für die entsprechende Mehrzahl der Oberflächenabschnitte 22 kann deshalb eine entsprechende Anzahl von Pixel mit einer zugehörigen Helligkeit und/oder einem zugehörigen Farbwert mittels der Prozessoreinheit 8 ermittelt werden. Zusammen bilden die Pixel das Wärmebild. Das Wärmebild repräsentiert deshalb die Verteilung der Temperaturen an der Oberfläche des Objekts 4.

Die Signalschnittstelle 10 des Systems 2 ist dazu ausgebildet, ein Bildsignal B bereitzustellen, insbesondere zu übertragen und/oder zu senden. Das Bildsignal B repräsentiert das Wärmebild des Objekts 4. Das Bildsignal B kann von der Prozessoreinheit 8 oder von der Signalschnittstelle 10 ermittelt sein. Ist das Bildsignal B von der Prozessoreinheit 8 ermittelt, kann das Bildsignal B über die Signalverbindung 40 zu der Signalschnittstelle 10 und von dort aus als Bildsignal B übertragen werden. Dies gilt insbesondere dann, wenn die Prozessoreinheit 8 und die Signalschnittstelle 10 von einer gemeinsamen Einheit 38 gebildet sind.

Außerdem ist es bevorzugt vorgesehen, dass das System 2 eine Transporteinheit 26 aufweist. Die Transporteinheit 26 kann beispielsweise ein umlaufend angetriebenes Förderband 44, eine erste Umlenkrolle 46 und eine zweite Umlenkrolle 48 aufweisen. Das Förderband 44 umschlingt jede der beiden Umlenkrollen 46, 48 teilweise. Die erste Umlenkrolle 46 kann als eine angetriebene Umlenkrolle 46 mit einer Antriebseinheit ausgebildet sein. Die erste Umlenkrolle 46 kann deshalb ein Umlauf des Förderbands 44 bewirken. Durch die angetriebene Umlenkrolle 46 kann ein Objekt 4, das auf einem Transporttrum des Förderbands 44 liegt, in der Spaltenrichtung S transportiert werden. Somit ist die Transporteinheit 26 zum Transport des Objekts 4 ausgebildet. Außerdem ist die Transporteinheit 26 vorzugsweise derart angeordnet, um das Objekt 4 in Spaltenrichtung S an dem Detektorarray 6 vorbeizubewegen. Durch das Vorbeibewegen des Objekts 4 mittels der Transporteinheit 26 werden die Oberflächenabschnitte 22 des Objekts 4 von den Messzellen 12 erfasst, so dass, wie zuvor erläutert, ein Wärmebild des Objekts 4 ermittelt werden kann. Vorzugsweise ist das System 2 dazu ausgebildet, die Transporteinheit 26 derart anzusteuern, so dass das Objekt 4 ununterbrochen an dem Detektorarray 6 vorbeibewegt wird, während das Detektorarray 6 mittels der zugehörigen Messzelle 12 die Infrarotstrahlung der Oberflächenabschnitte 22 des Objekts 4 erfasst und die zugehörigen Messwerte M erzeugt.

Vorzugsweise weist das System 2 eine Steuereinheit 28 auf. Die Steuereinheit 28 kann dazu ausgebildet sein, um die Transporteinheit 26 zu steuern. Die Steuereinheit 28 ist vorzugsweise derart ausgebildet, um die Transporteinheit 26 derart zu steuern, so dass das Objekt 4 mit einer vorbestimmten Transportgeschwindigkeit an dem Detektorarray 6 vorbeibewegt wird. Außerdem ist die Steuereinheit 28 vorzugsweise über eine weitere Signalverbindung 30 mit der Prozessoreinheit 8 gekoppelt, um ein Geschwindigkeitssignal, das die Geschwindigkeit des Objekts 4 und/oder die Transportgeschwindigkeit repräsentiert, an die Prozessoreinheit 8 zu übertragen. Das Geschwindigkeitssignal kann somit die tatsächliche Geschwindigkeit des Objekts 4 in Spaltenrichtung S repräsentieren. Diese Richtung, in der das Objekt 4 von der Transporteinheit 26 transportiert wird, kann auch als Transportrichtung bezeichnet sein. Die Transportrichtung kann mit der Spaltenrichtung S übereinstimmen. Basierend auf der tatsächlichen Geschwindigkeit des Objekts 4 kann die Prozessoreinheit 8 die von den Messzellen 12 und/oder dem Detektorarray 6 stammenden Messwerte M einzelnen Oberflächenabschnitten 22 zuordnen, so dass die Prozessoreinheit 8 dazu konfiguriert ist, jedem Oberflächenabschnitt 22 des Objekts 4 die Messwertgruppe der mehreren Messwertgruppen zuzuordnen, deren Messwerte M eine Temperatur des jeweiligen, gleichen Oberflächenabschnitts 22 repräsentieren.

Außerdem hat es sich als vorteilhaft herausgestellt, wenn das System 2 einen Geschwindigkeitssensor 32 aufweist. Der Geschwindigkeitssensor 32 ist vorzugsweise derart angeordnet und/oder ausgebildet, um die Geschwindigkeit des an dem Detektorarray 6 vorbeigeführten Objekts 4 zu erfassen. Mit dem Geschwindigkeitssensor 32 kann also ebenfalls auf die Geschwindigkeit des Objekts 4 in Spaltenrichtung S bzw. in Transportrichtung der Transporteinheit 26 geschlossen werden. Vorzugsweise ist der Geschwindigkeitssensor 32 zur Erzeugung eines Sensorsignals ausgebildet, das die erfasste Geschwindigkeit des Objekts 4 repräsentiert, und wobei der Geschwindigkeitssensor 32 mit der Prozessoreinheit 8 über eine weitere Signalverbindung 36 gekoppelt sein kann, um das Sensorsignal an die Prozessoreinheit 8 zu übertragen. Somit kann auch über das Sensorsignal die Information über die Geschwindigkeit des Objekts 4 in Spaltenrichtung S an die Prozessoreinheit 8 übertragen werden. Auf die entsprechenden Vorteile und/oder Effekte, wie sie zuvor erläutert worden sind, wird in analoger Weise Bezug genommen.

In der Figur 7 ist eine vorteilhafte Ausgestaltung eines Ablaufplans des erfindungsgemäßen Verfahrens dargestellt. Das Verfahren dient zur Ermittlung des Wärmebilds des bewegten Objekts 4 mittels des Systems 2. Auf die vorangegangenen Erläuterungen zu dem System 2 wird deshalb bevorzugt Bezug genommen. Das Verfahren weist zumindest die Schritte a) bis g) auf, die im Folgenden wiedergegeben sind:

a) Periodisches Erfassen von Infrarotstrahlung mittels jeder Messzelle 12 im zugehörigen Erfassungsbereich 20, während ein Objekt 4 in einer Spaltenrichtung S der Spalten 18 an dem Detektorarray 6 vorbeibewegt wird und jede Spalte 18 dadurch in Spaltenrichtung S über einen jeweils zugeordneten Oberflächenstreifen des Objekts 4 hinwegbewegt wird, so dass je gemeinsamer Spalte 18 jede der Messzellen 12 der jeweiligen gemeinsamen Spalte 18 jeweils zum einen die Infrarotstrahlung des gleichen von jedem Oberflächenabschnitt 22 einer Mehrzahl von Oberflächenabschnitten 22 des der jeweiligen Spalte 18 zugeordneten Oberflächenstreifens des Objekts 4 mehrfach erfassten und dadurch zum anderen mehrere Messwerte M für jeden Oberflächenabschnitt des der jeweiligen gemeinsamen Spalte 18 zugeordneten Oberflächenstreifens des Objekts 4 erzeugen;

b) Bilden jeweils einer Messwertgruppe für den jeweiligen Oberflächenabschnitt 22 aus jeweils einer Mehrzahl der von der gleichen Messzelle 12 erzeugten Messwerte M, die sich auf den gleichen Oberflächenabschnitt 22 beziehen;

c) Übertragen der Messwerte M von dem Detektorarray 6 über eine Signalverbindung 24 zu der Prozessoreinheit 8;

d) Ermitteln jeweils einer Prädiktionstemperatur als Vorhersagetemperatur für die tatsächliche Temperatur am jeweils zugeordneten Oberflächenabschnitt 22 des Objekts 4 mittels der Prozessoreinheit 8 basierend auf jeder Messwertgruppe, so dass für jeden Oberflächenabschnitt 22 des Objekts 4 mehrere Prädiktionstemperaturen ermittelt werden;

e) Ermitteln eines Temperaturmittelwerts für jeden Oberflächenabschnitt 22 mittels der Prozessoreinheit 8 aus den Prädiktionstemperaturen für den jeweiligen Oberflächenabschnitt 22;

f) Ermitteln eines Wärmebilds des Objekts 4 mittels der Prozessoreinheit 8 basierend auf den Temperaturmittelwerten für die Oberflächenabschnitte 22 des Objekts 4; und

g) Bereitstellen eines Bildsignals B mittels der Signalschnittstelle 10, wobei das Bildsignal B das Temperaturbild des Objekts 4 repräsentiert.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.


**Patentansprüche**

1.  **System (2)** zur Ermittlung eines Wärmebilds eines bewegten Objekts (4), aufweisend:

    ein Detektorarray (6),
    eine Prozessoreinheit (8), und
    eine Signalschnittstelle (10),
    wobei das Detektorarray (6) eine Vielzahl von bolometrischen Messzellen (12) aufweist, die gemäß einer Matrixstruktur (14) in Zeilen (16) und Spalten (18) angeordnet sind, so dass in jeder Zeile (16) mehrere Messzellen (12) hintereinander angeordnet sind und in jeder Spalte (18) in einer Spaltenrichtung mehrere Messzellen (12) hintereinander angeordnet sind,
    wobei jeder Messzelle (12) ein Erfassungsbereich (20) zugeordnet ist und jede Messzelle (12) zur Erfassung von Infrarotstrahlung im zugehörigen Erfassungsbereich (20) ausgebildet ist,
    wobei jede Messzelle (12) basierend auf der von der jeweiligen Messzelle (12) erfassten Infrarotstrahlung zur Erzeugung eines Messwerts M ausgebildet ist, der eine Temperatur im zugehörigen Erfassungsbereich (20) der jeweiligen Messzelle (12) repräsentiert,
    wobei das System (2) ausgebildet ist, das Detektorarray (6) derart zu steuern, um die Infrarotstrahlung im Erfassungsbereich (20) einer jeden Messzelle (12) einer gemeinsamen Spalte (18) mittels der jeweiligen Messzelle (12) derart periodisch zu erfassen und zugehörige Messwerte M zu erzeugen, während ein Objekt (4) in der Spaltenrichtung S der Spalten (18) an dem Detektorarray (6) vorbeibewegt wird und jede Spalte (18) dadurch in Spaltenrichtung S über einen jeweils zugeordneten Oberflächenstreifen des Objekts (4) hinwegbewegt wird, so dass je gemeinsamer Spalte (18) jede der Messzellen (12) der jeweiligen gemeinsamen Spalte (18) jeweils

    zum einen die Infrarotstrahlung von jedem Oberflächenabschnitt (22) einer Mehrzahl von Oberflächenabschnitten (22) des der jeweiligen Spalte (18) zugeordneten Oberflächenstreifens des Objekts (4) mehrfach erfassen und dadurch
    zum anderen mehrere Messwerte M für jeden Oberflächenabschnitt des der jeweiligen gemeinsamen Spalte (18) zugeordneten Oberflächenstreifens des Objekts (4) erzeugen,

    wobei jede Mehrzahl der von der gleichen Messzelle (12) erzeugten Messwerte M, die sich auf den gleichen Oberflächenabschnitt (22) beziehen, eine Messwertgruppe für den jeweiligen Oberflächenabschnitt (22) bilden,
    wobei das Detektorarray (6) über eine Signalverbindung (24) mit der Prozessoreinheit (8) gekoppelt ist, um die von den Messzellen (12) erzeugten Messwerte M an die Prozessoreinheit (8) zu übertragen,
    wobei die Prozessoreinheit (8) konfiguriert ist, jedem Oberflächenabschnitt (22) die Messwertgruppen der mehreren Messwertgruppen zuzuordnen, deren Messwerte M eine Temperatur des jeweiligen, gleichen Oberflächenabschnitts (22) repräsentieren,

wobei die Prozessoreinheit (8) konfiguriert ist, basierend auf jeder Messwertgruppe jeweils eine Prädiktionstemperatur als Vorhersagetemperatur für die tatsächliche Temperatur am jeweils zugeordneten Oberflächenabschnitt (22) des Objekts (4) zu ermitteln, so dass für jeden Oberflächenabschnitt (22) des Objekts (4) mehrere Prädiktionstemperaturen ermittelt werden,

wobei die Prozessoreinheit (8) konfiguriert ist, einen Temperaturmittelwert für jeden Oberflächenabschnitt (22) aus den Prädiktionstemperaturen für den jeweiligen Oberflächenabschnitt (22) zu ermitteln,

wobei die Prozessoreinheit (8) konfiguriert ist, ein Wärmebild des Objekts (4) basierend auf den Temperaturmittelwerten für die Oberflächenabschnitte (22) des Objekts (4) zu ermitteln, und

wobei die Signalschnittstelle (10) ausgebildet ist, ein Bildsignal B bereitzustellen, das das Wärmebild des Objekts (4) repräsentiert.

2. System (2) nach dem vorhergehenden Anspruch, **dadurch gekennzeichnet, dass** das Detektorarray (6) ausgebildet ist, dass jede Messzelle (12) die Infrarotstrahlung im zugehörigen Erfassungsbereich (20) periodisch mit einer jeweiligen Messdauer erfasst, die kleiner als die Hälfte einer Transferzeit ist, die ein Oberflächenabschnitt (22) des bewegten Objekts (4) zum Passieren durch den Erfassungsbereich (20) benötigt.

3. System (2) nach einem der vorhergehenden Ansprüche, **dadurch gekennzeichnet, dass** jede bolometrische Messzelle (12) des Detektorarrays (6) als ein Verzögerungsglied mit einer Zeitkonstante Tau ausgebildet ist, und wobei das Detektorarray (6) ausgebildet ist, dass jede Messzelle (12) die Infrarotstrahlung im zugehörigen Erfassungsbereich (20) periodisch mit der oder einer Messdauer erfasst, die kleiner als die Zeitkonstante Tau der jeweiligen Messzelle (12) ist, so dass jeder Messwert M durch Zeitverzögerung fehlerbehaftet ist.

4. System (2) nach dem vorhergehenden Anspruch, **dadurch gekennzeichnet, dass** die Zeitkonstante Tau einer jeden Messzelle (12) durch einen thermischen Widerstand der jeweiligen Messzelle (12) und einer thermischen Kapazität der jeweiligen Messzelle (12) bestimmt ist.

5. System (2) nach einem der vorhergehenden Ansprüche 3 bis 4, **dadurch gekennzeichnet, dass** die Messdauer kleiner als die Hälfte der Zeitkonstante Tau der jeweiligen Messzelle (12) ist.

6. System (2) nach einem der vorhergehenden Ansprüche 3 bis 5, **dadurch gekennzeichnet, dass** die Prozessoreinheit (8) konfiguriert ist, basierend auf jeder Messwertgruppe die jeweilige Prädiktionstemperatur als eine die Zeitverzögerung kompensierende Vorhersagetemperatur für die tatsächliche Temperatur am jeweils zugeordneten Oberflächenabschnitt (22) des Objekts (4) zu ermitteln.

7. System (2) nach einem der vorhergehenden Ansprüche, **dadurch gekennzeichnet, dass** die Prozessoreinheit (8) konfiguriert ist, die jeweilige Prädiktionstemperatur durch Extrapolation der Messwerte M der Messwertgruppe oder Multiplikation eines Differenzwerts der Messwerte M der jeweiligen Messwertgruppe mit einem vorbestimmten Faktor zwischen 0,5 und 0,8, insbesondere mit einem Faktor von 0,632 , zu ermitteln.

8. System (2) nach einem der vorhergehenden Ansprüche, **dadurch gekennzeichnet, dass** die Messzellen (12) die Infrarotstrahlung im zugehörigen Erfassungsbereich (20) jeweils mit einer Frequenz von mindestens 20 Hz periodisch erfassen.

9. System (2) nach einem der vorhergehenden Ansprüche, **dadurch gekennzeichnet, dass** das System (2) eine Transporteinheit (26) aufweist, die zum Transport des Objekts (4) ausgebildet ist, wobei die Transporteinheit (26) derart angeordnet ist, um das Objekt (4) in Spaltenrichtung S an dem Detektorarray (6) vorbeizubewegen.

10. System (2) nach dem vorhergehenden Anspruch, **dadurch gekennzeichnet, dass** das System (2) eine Steuereinheit (28) zum Steuern der Transporteinheit (26) aufweist, wobei die Steuereinheit (28) ausgebildet ist, die Transporteinheit (26) derart zu steuern, so dass das Objekt (4) mit einer vorbestimmten Transportgeschwindigkeit an dem Detektorarray (6) vorbeigeführt wird, und wobei die Steuereinheit (28) über eine weitere Signalverbindung (40) mit der Prozessoreinheit (8) gekoppelt ist, um ein Geschwindigkeitssignal, das die Geschwindigkeit des Objekts (4) repräsentiert, an die Prozessoreinheit (8) zu übertragen.

11. System (2) nach einem der vorhergehenden Ansprüche, **dadurch gekennzeichnet, dass** das System (2) einen Geschwindigkeitssensor G aufweist, der angeordnet und ausgebildet ist, um die Geschwindigkeit des an dem Detektorarray (6) vorbeibewegten Objekts (4) zu erfassen, wobei der Geschwindigkeitssensor G zur Erzeugung eines Sensorsignals (34) ausgebildet ist, das die erfasste Geschwindigkeit des Objekts (4) repräsentiert, und wobei der Geschwindigkeitssensor G mit der Prozessoreinheit (8) über eine weitere Signalverbindung (40) gekoppelt ist, um das Sensorsignal (34) an die Prozessoreinheit (8) zu übertragen.

12. System (2) nach einem der vorhergehenden Ansprüche 10 bis 11 in Kombination mit einem der Ansprüche 2 bis 5, **dadurch gekennzeichnet, dass** die Prozessoreinheit (8) konfiguriert ist, die Messwerte M der Messzellen (12) basierend auf der Geschwindigkeit des Objekts (4) und der Messwertdauer der Messzellen (12) in die Messwertgruppen aufzuteilen.

13. **Verfahren** zur Ermittlung eines Wärmebilds eines bewegten Objekts (4) mittels eines Systems (2), das eine Prozessoreinheit (8), eine Signalschnittstelle (10) und ein Detektorarray (6) aufweist, das eine Vielzahl von bolometrischen Messzellen (12) aufweist, die gemäß einer Matrixstruktur (14) in Zeilen (16) und Spalten (18) angeordnet sind, so dass in jeder Zeile (16) mehrere Messzellen (12) hintereinander angeordnet sind und in jeder Spalte (18) in einer Spaltenrichtung mehrere Messzellen (12) hintereinander angeordnet sind, wobei jede Messzelle (12) basierend auf einer von der jeweiligen Messzelle (12) erfassbaren Infrarotstrahlung zur Erzeugung eines Messwerts M ausgebildet ist, der eine Temperatur im zugehörigen Erfassungsbereich (20) der jeweiligen Messzelle (12) repräsentiert, und wobei das Verfahren die Schritte aufweist:

   a) Periodisches Erfassen von Infrarotstrahlung mittels jeder Messzelle (12) im zugehörigen Erfassungsbereich (20), während ein Objekt (4) in einer Spaltenrichtung S der Spalten (18) an dem Detektorarray (6) vorbeibewegt wird und jede Spalte (18) dadurch in Spaltenrichtung S über einen jeweils zugeordneten Oberflächenstreifen des Objekts (4) hinwegbewegt wird, so dass je gemeinsamer Spalte (18) jede der Messzellen (12) der jeweiligen gemeinsamen Spalte (18) jeweils

      a. zum einen die Infrarotstrahlung des gleichen von jedem Oberflächenabschnitt (22) einer Mehrzahl von Oberflächenabschnitten (22) des der jeweiligen Spalte (18) zugeordneten Oberflächenstreifens des Objekts (4) mehrfach erfassten und dadurch
      b. zum anderen mehrere Messwerte M für jeden Oberflächenabschnitt (22) des der jeweiligen gemeinsamen Spalte (18) zugeordneten Oberflächenstreifens des Objekts (4) erzeugen;

   b) Bilden jeweils einer Messwertgruppe für den jeweiligen Oberflächenabschnitt (22) aus jeweils einer Mehrzahl der von dergleichen Messzelle (12) erzeugten Messwerte M, die sich auf den gleichen, jeweiligen Oberflächenabschnitt (22) beziehen;
   c) Übertragen der Messwerte M von dem Detektorarray (6) über eine Signalverbindung (40) an die Prozessoreinheit (8);
   d) Ermitteln jeweils einer Prädiktionstemperatur als Vorhersagetemperatur für die tatsächliche Temperatur am jeweils zugeordneten Oberflächenabschnitt (22) des Objekts (4) mittels der Prozessoreinheit (8) basierend auf jeder Messwertgruppe, so dass für jeden Oberflächenabschnitt (22) des Objekts (4) mehrere Prädiktionstemperaturen ermittelt werden;
   e) Ermitteln eines Temperaturmittelwerts für jeden Oberflächenabschnitt (22) mittels der Prozessoreinheit (8) aus den Prädiktionstemperaturen für den jeweiligen Oberflächenabschnitt (22);
   f) Ermitteln eines Wärmebilds des Objekts (4) mittels der Prozessoreinheit (8) basierend auf den Temperaturmittelwerten für die Oberflächenabschnitte (22) des Objekts (4); und
   g) Bereitstellen eines Bildsignals B mittels der Signalschnittstelle (10), wobei das Bildsignal B das Temperaturbild des Objekts (4) repräsentiert.

14. Verfahren nach dem vorhergehenden Anspruch, **dadurch gekennzeichnet, dass** jede Messzelle (12) in Schritt a) die Infrarotstrahlung im zugehörigen Erfassungsbereich (20) periodisch mit einer jeweiligen Messdauer erfasst, die kleiner als die Hälfte einer Transferzeit ist, die ein Oberflächenabschnitt (22) des bewegten Objekts (4) zum Passieren durch den Erfassungsbereich (20) benötigt.

15. Verfahren nach einem der vorhergehenden Ansprüche 13 bis 14, **dadurch gekennzeichnet, dass** jede bolometrische Messzelle (12) des Detektorarrays (6) als ein Verzögerungsglied mit einer Zeitkonstante Tau ausgebildet ist, und wobei jede Messzelle (12) in Schritt a) die Infrarotstrahlung im zugehörigen Erfassungsbereich (20) periodisch mit der oder einer Messdauer erfasst, die kleiner als die Zeitkonstante Tau der jeweiligen Messzelle (12) ist, so dass jeder Messwert M durch Zeitverzögerung fehlerbehaftet ist.

Fig. 1

Fig. 2

EP 4 161 047 A1

Fig. 3

Fig. 4

Fig. 5

Fig. 6

Fig. 7

Europäisches
Patentamt

European
Patent Office

Office européen
des brevets

**EUROPÄISCHER RECHERCHENBERICHT**

**Nummer der Anmeldung**

**EP 21 19 9715**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | EP 3 789 743 A1 (BASLER AG [DE]) 10. März 2021 (2021-03-10) * Absatz [0013]; Ansprüche 1, 4, 5, 7, 9, 10 * | 1-15 | INV. H04N1/047 G01J5/20 |
| | ----- | | ADD. |
| Y | US 2018/063454 A1 (OLSSON STEFAN [SE]) 1. März 2018 (2018-03-01) * Absatz [0042] – Absatz [0136]; Anspruch 1 * | 1-15 | H04N5/33 |
| | ----- | | |
| Y | WO 00/70316 A1 (ALARIS MEDICAL SYST INC [US]) 23. November 2000 (2000-11-23) * Seite 4 – Seite 7; Anspruch 1 * ----- | 1-15 | |

**RECHERCHIERTE SACHGEBIETE (IPC)**

H04N
G01J
G01K

Der vorliegende Recherchenbericht wurde für alle Patentansprüche erstellt

| Recherchenort | Abschlußdatum der Recherche | Prüfer |
|---|---|---|
| München | 21. März 2022 | Doswald, Daniel |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 19 9715

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-03-2022

| Im Recherchenbericht angeführtes Patentdokument | Datum der Veröffentlichung | Mitglied(er) der Patentfamilie | Datum der Veröffentlichung |
|---|---|---|---|
| EP 3789743 A1 | 10-03-2021 | KEINE | |
| US 2018063454 A1 | 01-03-2018 | KEINE | |
| WO 0070316 A1 | 23-11-2000 | AT 345491 T | 15-12-2006 |
| | | AU 781183 B2 | 12-05-2005 |
| | | CA 2373366 A1 | 23-11-2000 |
| | | DE 60031847 T2 | 01-03-2007 |
| | | EP 1183508 A1 | 06-03-2002 |
| | | ES 2275515 T3 | 16-06-2007 |
| | | HK 1044371 A1 | 18-10-2002 |
| | | JP 2002544512 A | 24-12-2002 |
| | | JP 2011075580 A | 14-04-2011 |
| | | JP 2011203269 A | 13-10-2011 |
| | | US 6270252 B1 | 07-08-2001 |
| | | US 2002003832 A1 | 10-01-2002 |
| | | WO 0070316 A1 | 23-11-2000 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- EP 3789743 A1

**In der Beschreibung aufgeführte Nicht-Patentliteratur**

- Mathematik für Ingenieure und Naturwissenschaftler. *Ein Lehr- und Arbeitsbuch für das Grundstudium,* vol. 2, ISBN 978-3658077891

- Mathematik für Ingenieure und Naturwissenschaftler. *Ein Lehr- und Arbeitsbuch für das Grundstudium,* vol. 1, ISBN 978-3658217457
- The Art of Computer Programming. 03. Marz 2011, vol. 1-4